# EUROPEAN PATENT SPECIFICATION

(11) **EP 2 528 847 B1**
(45) Date of publication and mention of the grant of the patent: **18.06.2014**
(21) Application number: 10707136.7
(22) Date of filing: 29.01.2010
(51) Int. Cl.: B65G 21/20, B65G 33/04, B65G 33/06

(54) **MODULAR ELEMENT FOR A CONTAINER PROCESSING MACHINE**
MODULARES ELEMENT FÜR EINE BEHÄLTERVERARBEITUNGSMASCHINE
ELÉMENT MODULAIRE POUR MACHINE DE TRAITEMENT DE RÉCIPIENTS

(43) Date of publication of application: 05.12.2012
(73) Proprietor: Sidel S.p.a. Con Socio Unico, Parma (IT)
(72) Inventor: CARMICHAEL James, 43100 Parma (IT)
(74) Representative: Bergadano, Mirko
(86) International application number: PCT/IT2010/000025
(87) International publication number: WO 2011/092723

(56) References cited:
- JP-A- 58 162 423
- US-A- 4 923 571
- US-A- 4 947 979

## Description

### TECHNICAL FIELD

The present invention relates to a modular replaceable element for a container processing machine, to a conveying unit, to a container processing machine, to a series of conveying units for container processing machine, and to a method for adapting a conveying unit for a container processing machine to a different format of containers.

### BACKGROUND ART

As is known, many liquid or powder products including not only food products such as milk, fruit juices or beverages in general, but also mineral lubricating or detergent oils are sold in containers having different shapes and size.

These containers are manufactured in plants comprising a plurality of stations at each of which corresponding machines process such containers.

Examples of such machines are rinsing, filling, capping and labelling machines.

The above said plants also comprise a plurality of linear conveyors and star wheels for feeding the system with the containers, for transferring the containers from a machine to the other and for transferring the containers outside the system.

More precisely, star wheels comprise a plurality of circumferential seats adapted to receive respective containers.

At some point along the linear conveyor trajectory, the containers come into a position of in-line mutual contact. In order to address the problem of separating the containers from their position of mutual contact so that they can be taken up by the seats of the star wheel, a worm-screw is usually located at a location adjacent to the conveyor. The worm screw extends alongside the conveyor belt and is arranged to mesh with the contour of the containers to feed them smoothly and continuously into the seats of the star wheels.

Since plants usually process containers of different format, e.g. with reference to size and shape, the worm-screws are required to efficiently convey containers of different format.

To this purpose, it is necessary to ensure that the worm-screw meshes with a certain amount of the contour of the containers of different format. This need is especially felt when container speed increases and container weight decreases.

In a first known solution, conveying unit comprises a support structure rotatably supporting the worm-screw about a first axis. In particular, the worm-screw is fixed to the support structure. In this way, the first axis cannot be moved with respect to such support structure.

Accordingly, such worm-screws are optimized for only one given format containers, and are prevented from meshing with a substantial amount of the contour of the containers having different size from such given format.

As a consequence, fixed axis worm-screws are prevented from efficiently conveying containers whose format is very different from the given format.

For example, fixed axis worm-screws fail to efficiently convey containers whose format is smaller than the given format.

Fixed axis worm-screws therefore result in severe limitations on the efficiency of the conveyance of containers.

It is also known to use worm-screws supported by support structure through bearings, which are mounted on a pair of slides.

More precisely, the slides allow the worm-screw to be moved along a second axis and a third axis orthogonal to the first axis. In particular, the second axis is horizontal and the third axis is vertical.

In this way, when it necessary to change the format of the containers to be processes, the worm-screw is moved with respect to the support structure and arranged in given position, in which it meshes with a substantial amount of the volume of the containers to be conveyed.

However, this kind of worm-screws are likely to be misadjusted when the format of the containers is changed, so causing delays and lost production.

A need is felt within the industry to provide a conveying unit which can be easily reconfigured for different containers format, so as to eliminate operator errors which may result in a damage of containers. Such need is especially felt when containers are conveyed at particularly high speed and/or the surfaces of containers are particularly delicate.

A need is also felt within the industry to allow an ideal application position and contact profile between containers, so as to efficiently convey containers with delicate surfaces at the highest speed possible.

Finally, a need is felt to meet the above-identified requirements while reducing the costs and the space due to the motors driving in rotation the worm-screws.

US-A-4923571 discloses an element for a container processing machine.

### DISCLOSURE OF INVENTION

It is an object of the present invention to provide a modular element for a container processing machine allowing to efficiently convey containers of different format and designed to meet at least one of the above-identified requirements in a straightforward, low-cost manner.

According to the present invention, there is provided a modular element for a container processing machine as claimed in claim 1, a convenying unit as claimed in claim 4, and a container processing machine as claimed in claim 11.

Furthermore, according to the present invention, there is provided a series of conveying units for container processing machine as claimed in claim 12.

Finally, according to the present invention, there is provided a method for adapting a conveying unit for a container process machine to a different format of containers as claimed in claim 15.

### BRIEF DESCRIPTION OF THE DRAWINGS

In the following a preferred, non-limiting embodiment of the present invention will be described by way of example with reference to the accompanying drawings, in which:
Figure 1 shows a perspective view of a modular element according to the present invention and of a first embodiment of a conveying unit incorporating such modular element;
Figure 2 shows a section along line II-II of Figure 1;
Figure 3 shows a lateral view of the first embodiment of a conveying unit incorporating the modular elements of Figure 1;
Figure 4 shows a frontal view of the first embodiment of the conveying unit of Figure 1;
Figures 5 and 6 show respective frontal views of a second embodiment of the conveying unit incorporating the modular element of Figure 1 while processing containers having respective format different from one another;
Figure 7 shows a frontal view of the second embodiment of the conveying unit, with parts sectioned;
Figure 8 shows a frontal view of a third embodiment of the conveying unit incorporating the modular element of Figure 1;
Figure 9 shows a lateral view of a fourth embodiment of a conveying unit incorporating the modular element of Figure 1;
Figure 10 shows a section along line X-X of Figure 9;
Figure 11 shows a lateral view of a fifth embodiment of a conveying unit incorporating the modular element of Figure 1; and
Figure 12 is a section along line XII-XII of Figure 11; and
Figure 13 shows a schematic top view of a container processing machine incorporating the modular element of Figure 1.

### BEST MODE FOR CARRYING OUT THE INVENTION

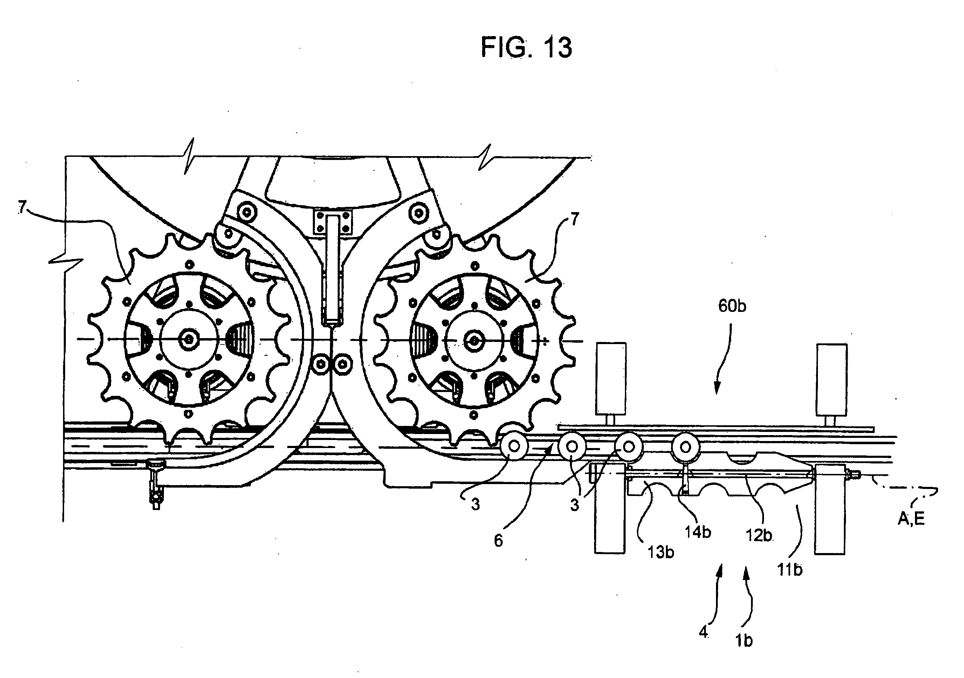

Number 1a in the accompanying Figures indicate as a whole a modular element for a machine 2 (Figure 13) for processing containers 3, such as bottles, pots, cans and the like.

Non-limitative examples of such products include not only food products such as milk, fruit juices or beverages in general, although also mineral lubricating or detergent oils are sold in containers having different shapes and size.

Machine 2 may be a rinsing machine for rinsing the containers, a filling machine for filling the containers with a predetermined volume of a liquid product, a capping machine for applying a plurality of caps on respective containers or a labelling machine for applying a plurality of labels on respective containers.

In the case shown, machine 2 is a labelling machine.

Modular element 1a is incorporated in a conveying unit 4, which substantially comprises:
- a fixed structure 5;
- a linear conveyor 6 for conveying the containers to be labelled by machine 2 along a direction A; and
- a plurality of star wheels 7 (only one of which is shown in Figure 13) fed by conveyor 6 with containers 3 and feeding containers 3 along a circumferential arc shaped trajectory.

Star wheels 7 rotate along respective vertical axes and comprise a plurality of angularly equi-spaced seats for respective containers 3.

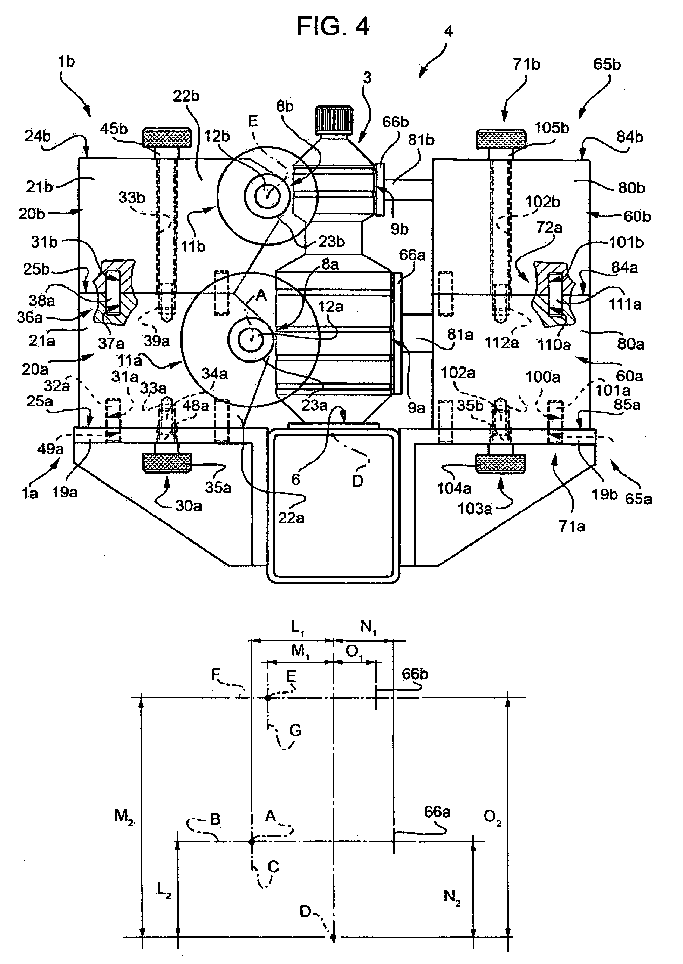

Modular element 1a advantageously comprises (Figure 4):
- a pair of support elements 20a;
- releasable connecting means 30a for releasably connecting such support elements 20a to fixed structure 5; and
- a worm-screw 11a which rotates about axis A relative to support elements 20a and is adapted to cooperate with a first portion 8a of containers 3 advancing on conveyor 6 in order to distance them at a given pitch;
worm-screw 11a is fixed to support elements 20a with respect to an axis B transversal to axis A and to an axis C transversal to both axes A, B;
support elements 20a support axis A of worm-screw 11a at a first distance L₁ from a reference fixed axis D measured parallel to axis B, and at a second distance L₂ from axis D measured parallel to axis C;
first and second distances L₁, L₂ are associated to the format of containers 3 to be conveyed.

In particular, axis A is horizontal, axis B is horizontal and orthogonal to axis A and axis C is vertical and, therefore, orthogonal to both axes A, B.

Axis D is fixed with respect to structure 5, and is parallel to axis A.

In the embodiment shown, axis D coincides with the direction along which containers 3 advance on conveyor 6.

In particular, support elements 20a are arranged at opposite end of worm-screw 11a relative to axis A.

Each support element 20a substantially comprises:
- a parallelepiped main portion 21a; and
- a lateral portion 22a integral with main portion 21 and defining an apex 23a, which extends towards conveyor 6.

In particular main portion 21a comprises a top surface 24a and a bottom surface 25a.

Connecting means 30a releasably connect support element 20a of each modular element 1a to a plate 19a, which is connected to structure 5.

Connecting means 30a substantially comprise, for each modular element 1a,:
- a pair of holes 31a defined by relative surface 25a;
- a pair of pins 32a whose top halves engage respective holes 31a and whose bottom halves engage respective holes 49a of plate 19a;
- a screwed hole 33a interposed between holes 31a and defined by surface 25a; and
- a screwed pin 35a engaging hole 33a and passing through plate 19a.

Each modular element 1a further comprises connecting means 36a.

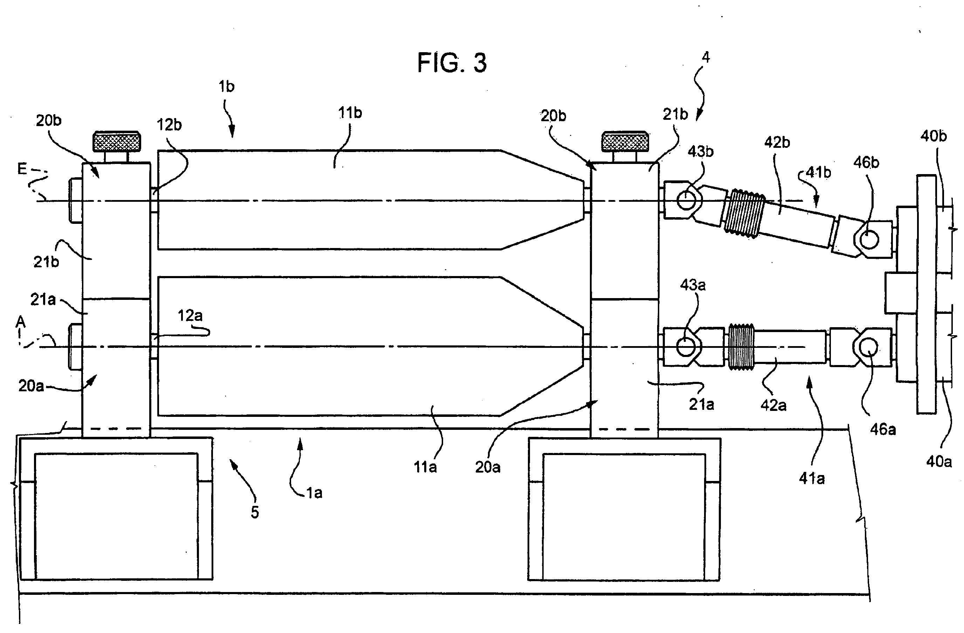

Connecting means 36a substantially comprise, for each support element 20a,:
- a pair of holes 37a defined by relative surface 24a;
- a pair of pins 38a whose bottom halves engage respective holes 33a; and
- a screwed hole 39a interposed between holes 37a and defined by surface 24a.
Worm-screw 11a comprises a shaft 12a elongated along axis A and an outer body 13a surrounding shaft 12a, In particular, body 13a is fitted to shaft 12a through the interposition of a pin 14a (Figure 3).

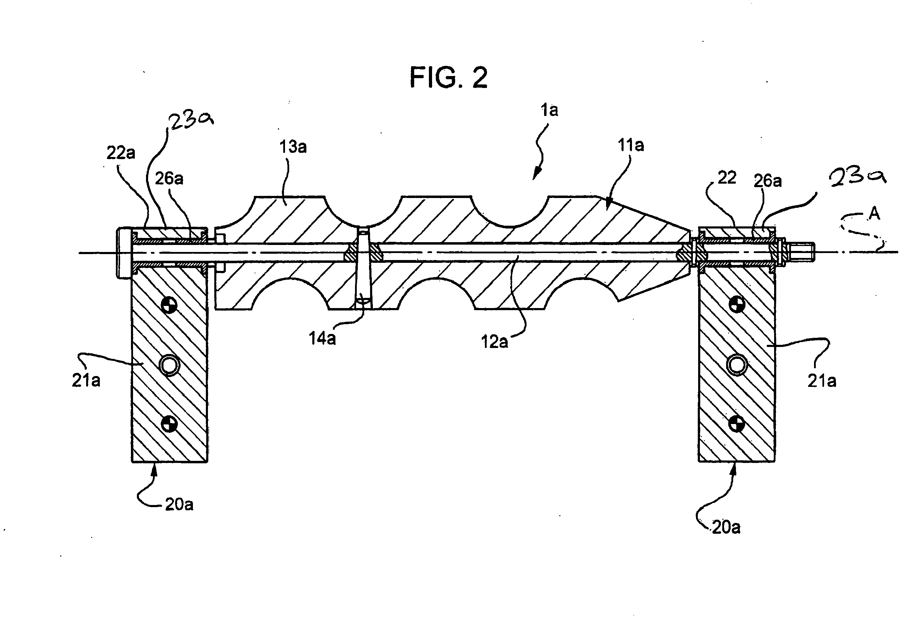

Apices 23a of support elements 20a house respective bearings 26a, which support body 13a rotatably with respect to axis A (Figure 2).

Conveying unit 4 comprises (Figure 4):
- modular element 1a;
- a modular element 1b, which is arranged over and is releasably connected with modular element 1a;
- a modular element 60a, which is arranged on the opposite side of modular elements 1a, 1b with respect to conveyor 6; and
- a modular element 60b, which is arranged over modular element 60a and is releasably connected to modular element 60a.

Modular element 1b is similar to modular element 1a and will be disclosed hereinafter only insofar as it differs from the latter; corresponding parts or equivalents of modular elements 1b, 1a will be indicated, where possible, by the same reference numerals.

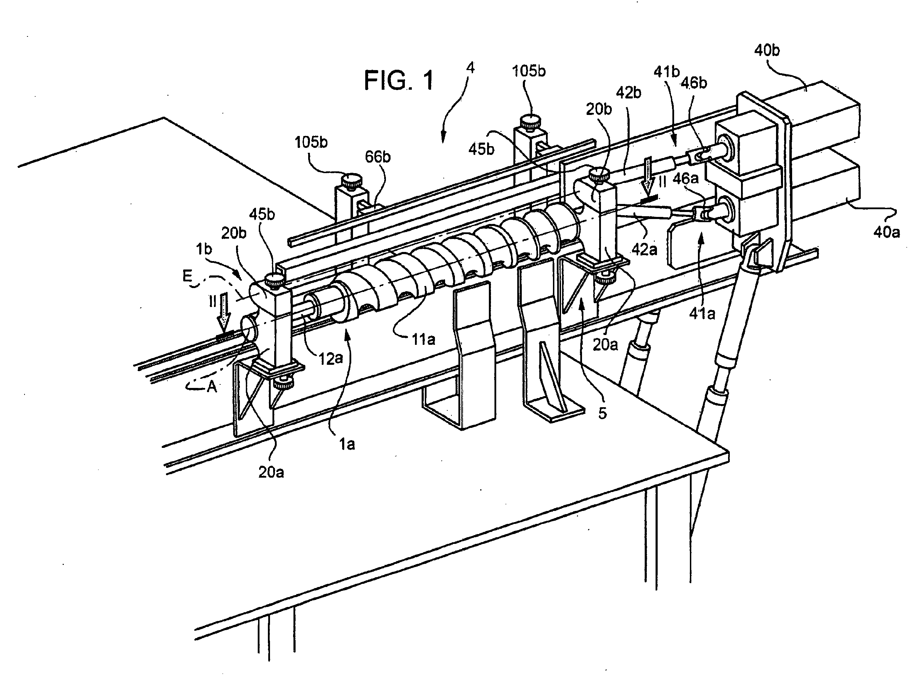

Modular element 1b differs from modular element 1a in that:
- worm-screw 11b (not shown in Figure 1 for sake of simplicity) rotates about axis E relative to support element 20b and is adapted to cooperate with a second portion 8b of containers 3 advancing on conveyor 6;
- worm-screw 11b is fixed to support elements 20b with respect to an axis F transversal to axis E and to an axis G transversal to both axes E, F; and in that
- support element 20b support axis E of worm-screw 11b at a third distance M₁ from reference axis D measured parallel to axis F and at a fourth distance M₂ from axis D measured parallel to axis G.

More precisely, axes E, F, G are parallel and arranged above respectively axes A, B, C.

Third and fourth distances M₁, M₂ are associated to the format of containers 3 to be conveyed.

In a completely analogous manner with respect to support element 20a, support element 20b comprises:
- a parallelepiped main portion 21b; and
- a lateral portion 22b integral with main portion 21 and defining an apex 23b, which extends towards conveyor 6.

In particular, main portion 21b comprises a top surface 24b and a bottom surface 25b.

Furthermore, connecting means 30b of modular element 1b are releasably connected to connecting means 36a of modular element 1a.

More precisely, connecting means 30b substantially comprise, for each support element 20b, (Figure 4):
- a pair of holes 31b defined by relative surface 25b and engaged by top halves of respective pins 38a;
- a through hole 33b; and
- a screwed hollow-pin 45b passing through hole 33b and screwed within hole 39a.

Each modular element 60a, 60b advantageously comprises (Figure 1):
- a pair of support elements 65a, 65b; and
- a fixed guide 66a, 66b adapted to cooperate with respectively portions 9a, 9b containers 3 advancing on conveyor 6.

More precisely, portion 9b is arranged in front of portion 8b and over portions 9a, 8a.

Support element 65a, 65b supports relative guides 6a, 66b at a relative distance N₁, O₁ from reference axis D measured parallel to axis B, F and at a relative distance N₂, 02 from axis D measured parallel to axis C, G. More precisely, N₁, O₁ and N₂, O₂ represent the distance between axis D and homologous points of guides 66a, 66b.

At least one between distances N₁, N₂ is associated to the format of said containers 3 to be conveyed.

In a completely analogous manner, at least one between distances O₁, O₂ is associated to the format of said containers 3 to be conveyed.

In particular, each pair support elements 65a, 65b is arranged on opposite axial end of relative guide 66a, 66b.

Each support element 65a, 65b substantially comprises:
- a parallelepiped main portion 80a, 80b; and
- a lateral arm 81a, 81b which protrudes integrally from respective main portion 80a, 80b towards conveyor 6 and respective apex 23a, 23b, and which carries, on the opposite side of main portion 80a, 80b, relative guide 66a, 66b.

In particular, main portion 80a, 80b of each support element 65a, 65b comprises a top surface 84a, 84b and a bottom surface 85a, 85b.

Modular element 60a comprises:
- connecting means 71a for releasably connecting each support element 65a to a plate 19b of fixed structure 5; and
- connecting means 72a for releasably connecting each support element 65a to support element 65b of modular element 60b.

Furthermore, modular element 60b comprises connecting means 71b for releasably connecting each support element 65b to connecting means 72a of relative support element 65a of modular element 60a.

In particular, connecting means 71a comprise, for each support element 65a,:
- a pair of holes 100a defined by surface 85a;
- a pair of pins 101a whose top halves engage respective holes 100a and whose bottom halves engage respective holes 32b of plate 19b;
- a screwed hole 102a interposed between holes 100a and defined by surface 85a; and
- a screwed pin 104a passing through a hole 35b defined by plate 19b and screwed within hole 102a.

In particular, hole 35b is interposed between holes 32b.

Connecting means 72a comprise, for each support element 65a,:
- a pair of holes 110a defined by surface 84a;
- a pair of pins 111a whose bottom halves engage respective holes 110a; and
- a screwed hole 112a interposed between holes 110a and defined by surface 84a.

Connecting means 71b substantially comprise, for each support element 65b,:
- a pair of holes 101b defined by relative surface 85b and engaged by top halves of respective pins 111a of relative support element 65a;
- a through hole 102b; and
- a screwed hollow pin 105b passing through hole 102b and screwed within hole 112a.

Conveying unit 4 further comprises a pair of motors 40a, 40b and of joints 41a, 41b (Figures 1 and 3).

Each joint 41a, 41b comprises a first shaft 42a, 42b, which is articulated onto an output shaft of respective motors 40a, 40b through a cardan joint 46a, 46b and which is articulated onto shaft 12a, 12b of a respective worm-screws 11a, 11b through a cardan joint 43a, 43b.

More precisely, shaft 42a, 42b comprises two rods telescopically coupled with one another. In this way, the distance between cardan joints 43a and 46a (43b and 46b) may vary when modular elements 1a, 1b are replaced with new modular elements 1a, 1b.

Joints 41a, 41b could be replaced by any kind of transmission mechanism capable of transmitting motion between two axes which can be either coaxial or parallel.

In use, conveyor 6 advances containers 3 parallel to axis A towards star wheel 7.

Upstream from worm-screws 11a, 11b of conveying unit 4, containers 3 come in mutual contact one with respect to another.

Worm-screws 11a, 11b cooperate with portions 8a, 8b of containers 3 and sequence such containers 3 at a given pitch, which corresponds to the angular distance between the seats of star wheel 7.

As first portions 8a of containers 3 cooperate with worm-screw 11a of modular element 1a, second portion 8b of worm-screw 11 of modular element 1b, third portions 9a of containers 3 cooperate with guide 66a and fourth portions 66b of containers 3 cooperate with guide 66b.

Motors 40a, 40b drive in rotation, through joints 41a, 41b worm-screws 11a, 11b about axes A, E.

Apices 23a, 23b of each modular element 1a, 1b support axes A, E of worm-screw 11a, 11b at the distance L₁, M₁ from reference axis D measured parallel to axis B, F and at the distances L₂, M₂ from reference axis D measured parallel to axis C.

More precisely, distances L₁, L₂ and M₁, M₂ are such that worm-screw 11a and 11b may engage with a certain amount of the surface of portions 8a, 8b containers 3, so efficiently conveying such containers 3 and distancing them at the given pitch.

Modular elements 60a, 60b support guides 66a, 66b at respective distances N₁, O₁ from reference axis D measured parallel to axes B, F, and at respective distances N₂, O₂ from reference axis D measured parallel to axes C, G.

In case that the format of containers 3 changes, i.e. because diameter or height of containers 3 changes, modular element 1b is removed from modular element 1a and modular element 1a is removed form fixed structure 5. In a completely analogous manner, modular element 60b is removed from modular element 60a and modular element 60a is removed from plate 19b fixed structure 5.

In particular, shafts 12a, 12b of worm-screws 11a, 11b are disconnected by shafts 42a, 42b of joints 41a, 41b.

New modular elements 1a, 1b, 60a, 60b are chosen on the basis of the format of new containers 3 to convey.

In other words, new modular elements 1a, 1b, 60a, 60b are chosen so that the new values of distances L₁, L2, M₁, M₂, N₁, N₂, O₁, O₂ ensure that containers 3 are efficiently conveyed.

For example, in case that the diameter of new containers 3 is smaller than the diameter of containers 3 previously conveyed, axes A, E of worm-screws 11a, 11b and guides 66a, 66b of new modular element 1a, 1b, 60a, 60b will be nearer to the vertical axis of new containers. 3 with respect to axes A, E and guides 66a, 66b of previously used modular element 1a, 1b, 60a, 60b.

Accordingly, new distances L₁, L₂, M₁, M₂, N₁, N₂, O₁, O₂ associated to new modular element 1a, 1b, 60a, 60b will be lower than distances L₁, L₂, M₁, M₂, N₁, N₂, O₁, O₂ associated to previously used modular element 1a, 1b, 60a, 60b.

Shafts 42a, 42b of joints 41a, 41b are connected to shafts 12a, 12b of worm-screws 11a, 11b of new modular element 1a, 1b.

In this way, even if axis A of worm-screw 11a, 11b of new modular element 1 is staggered with respect to axis A, E of relative worm-screw 11a, 11b of modular element 1a, 1b previously used, the same motors 40a, 40b and joint 41a, 41b may be used.

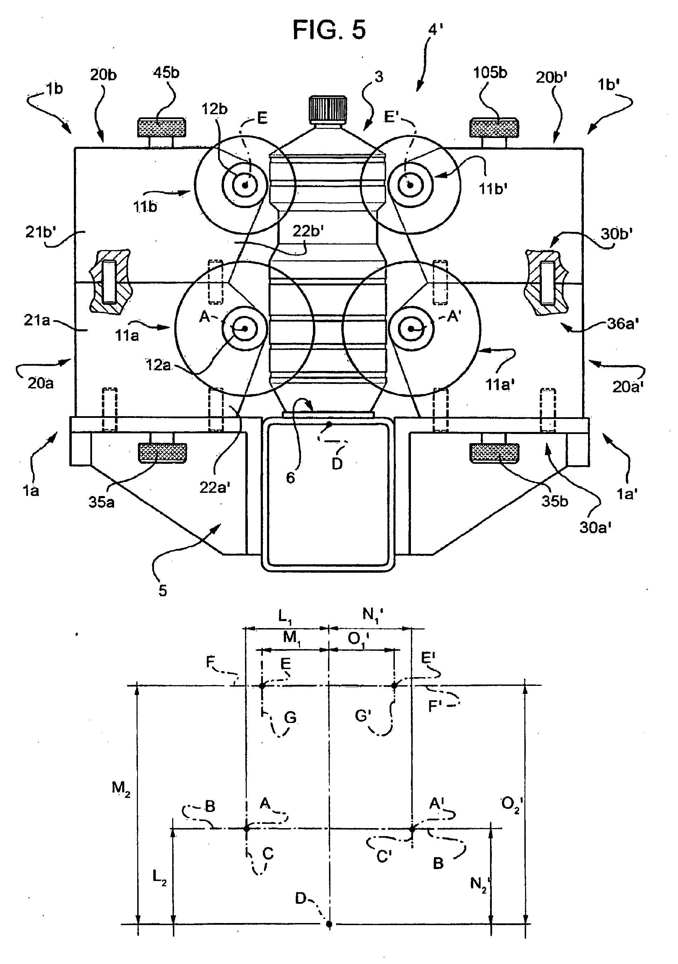

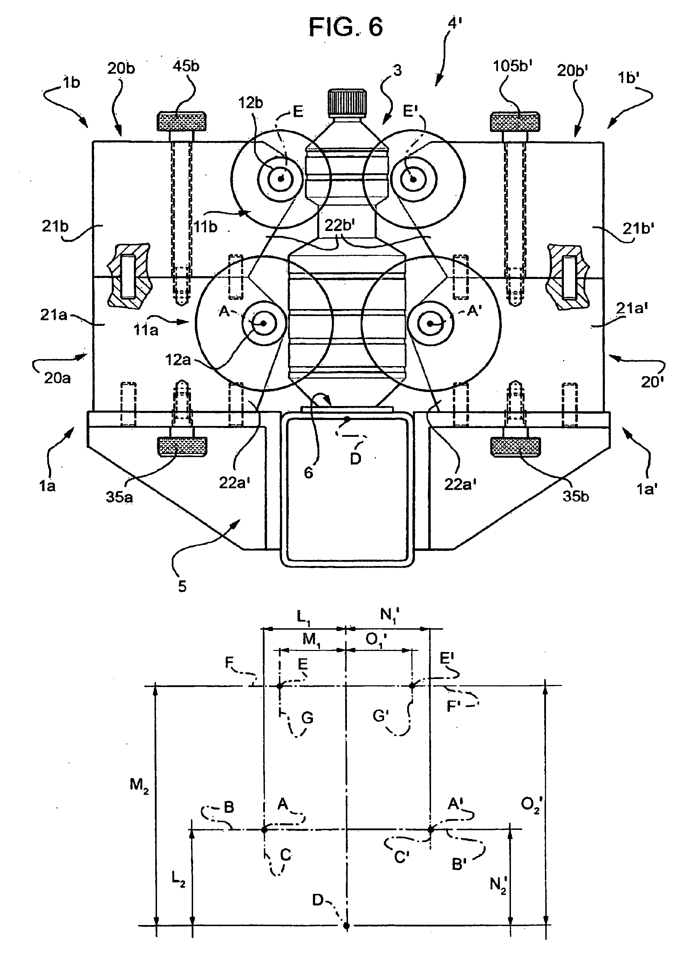

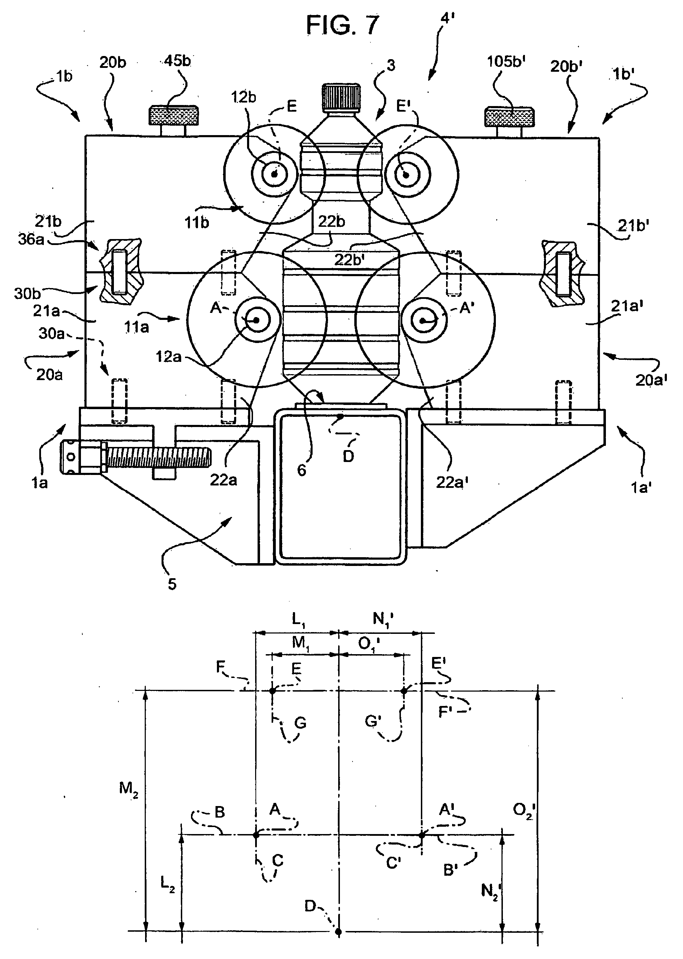

With reference to figure 5 to 7, 4' indicates a second embodiment of conveying unit.

Conveying unit 4' is similar to conveying unit 4 and will be disclosed hereinafter only insofar as it differs from the latter; corresponding parts or equivalents of conveying units 4, 4' will be indicated, where possible, by the same reference numerals.

Conveying unit 4' differs from conveying unit 4 in that it comprises further modular elements 1a', 1b' instead respectively of modular elements 60a, 60b.

Accordingly, conveying unit 4' comprises further worm-screws 11a', 11b' rotatably supported by support elements 20a', 20b' rotatably about respectively axes A' E'.

Worm-screw 11b' of modular element 1b' is arranged above worm-screw 11a' of modular element 1a', and axis E' is arranged above and parallel to axis A'.

Support elements 20a' support axis A' of worm-screw 11a' at a distance N₁' from axis D measured parallel to axis F' and at a distance N₂' measured parallel to axis G'. At least one between distances N₁', N₂' is chosen on the basis of the format of containers 3 to be conveyed.

In a completely analogous manner, support elements 20b' support axis E' of worm-screw 11b' at a distance O₁' from axis D measured parallel to axis F' and at a distance O₂' measured parallel to axis G'. At least one between distances O₁'; O₂' is chosen on the basis of the format of containers 3 to be conveyed.

Connecting means 30a' releasbaly connect each support element 20a' of modular element 1a' to plate 19b of fixed structure 5.

Connecting means 30b' are releasably connected with connecting means 36a' of support element 20a' of modular element 1a'. In this way, each support element 20b' of modular element 1b' is releasably connected to a corresponding support element 20a' of modular element 1a'.

Finally, conveying unit 4' differs from conveying unit 4 in that it comprises:
- a pair of further motors (not shown); and
- a pair of further joints (not shown).

Each further joint comprises a further shaft (not shown) which is articulated onto an output shaft of respective motor (not shown) through a first cardan joint and which is articulated onto shaft 12a' , 12b' of respective worm-screws through a second cardan joint.

Each further shaft comprises two rods telescopically coupled with one another.

In a completely analogous manner to joints 41a, 41b, further joints could be replaced by any kind of transmission mechanism capable of transmitting motion between two axes which can be either coaxial or parallel.

The operation of conveying unit 4' differs from the operation of conveying unit 4 in that not only first and second portions 8a, 8b of containers 3 cooperate respectively with worm-screw 11a, 11b of modular elements 1a, 1b, but also third and fourth portions 9a, 9b of such containers 3 cooperate respectively with worm-screw 11a', 11b' of modular elements 1a', 1b'.

Furthermore, shafts 12a', 12b' of worm-screws 11a', 11b' are driven in rotation by further motors through further joint.

In case that the format of containers 3 changes, i.e. because diameter or height of containers 3 changes, modular element 1b' is removed from modular element 1a', and modular element 1a' is removed form fixed structure 5.

In particular, shafts 12a', 12b' of worm-screw 11a', 11b' are disconnected by further second shafts of relative further joints.

New modular elements 1a, 1b, 1a', 1b' are chosen on the basis of the format of new containers 3 to be conveyed.

In other words, new modular elements 1a, 1b, 1a', 1b' are chosen so that the new values of distances L₁, L₂, M₁, M₂, N₁', N₂', O₁', O₂' ensure that containers 3 are efficiently conveyed and distanced at the given pitch.

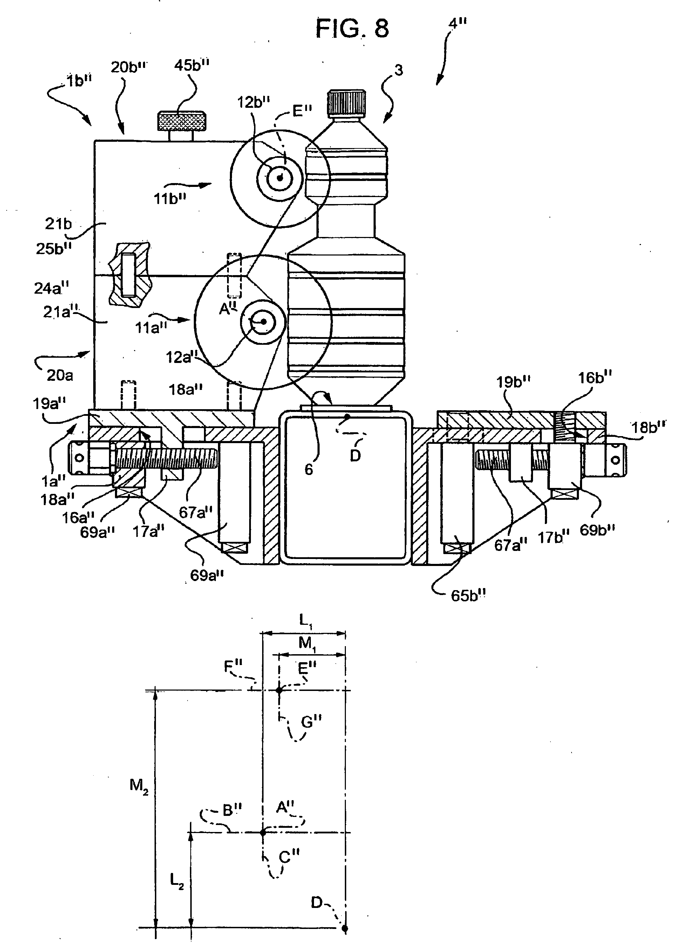

With reference to figure 8, 4" indicates a third embodiment of conveying unit.

Conveying unit 4" is similar to conveying unit 4' and will be disclosed hereinafter only insofar as it differs from the latter; corresponding parts or equivalents of conveying units 4', 4" will be indicated, where possible, by the same reference numerals.

Conveying unit 4" differs from conveying unit 4' for not comprising modular elements 1a', 1b'.

Furthermore, plates 19a", 19b" and, therefore, modular elements 1a", 1b" of conveying unit 4" may slide along axis B" relative respectively to plates 18a", 18b" of fixed structure 5.

In this way, it is possible to adjust position of modular elements 1a", 1b" relative to containers 3.

More precisely, each plate 19a", 19b" comprises, on the opposite side of worm-screws:
- respective protrusions 17a", 17b" housed with gap into respective grooves 16a", 16b" of plates 18a", 18b", and comprising, in turn, respective through holes, which are screwed parallel to axis B" and are engaged by screw 67a", 67b" extending parallel to axis B; and
- respective pair of screwed through holes 68a", 68b" which are coupled with respective screws 69a", 69b".

More precisely, screwed holes and screws 69a", 69" extend parallel to axis C".

The operation of conveying unit 4" is similar to the operation of conveying unit 4' and is therefore not hereinafter described.

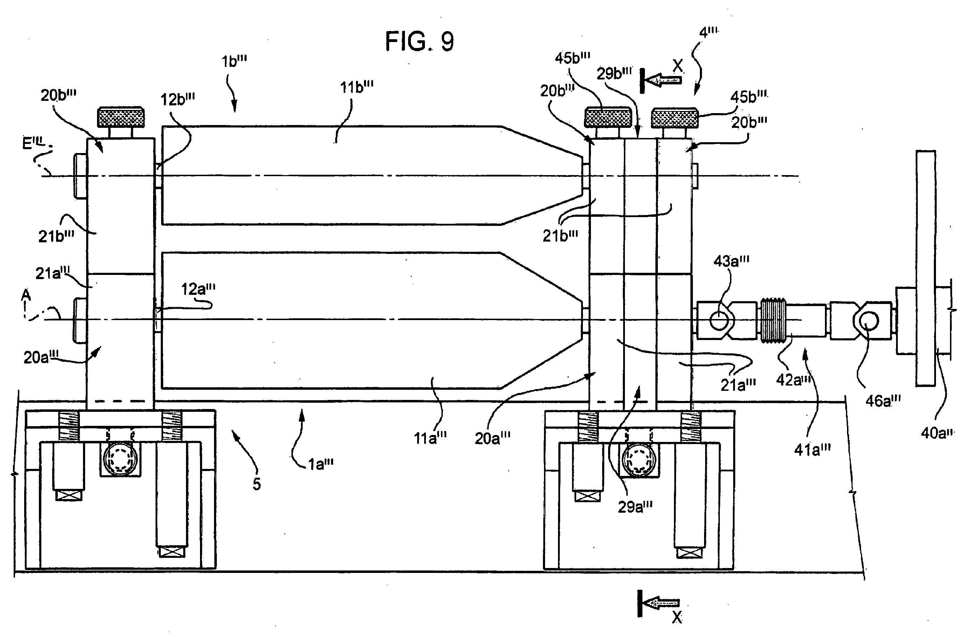

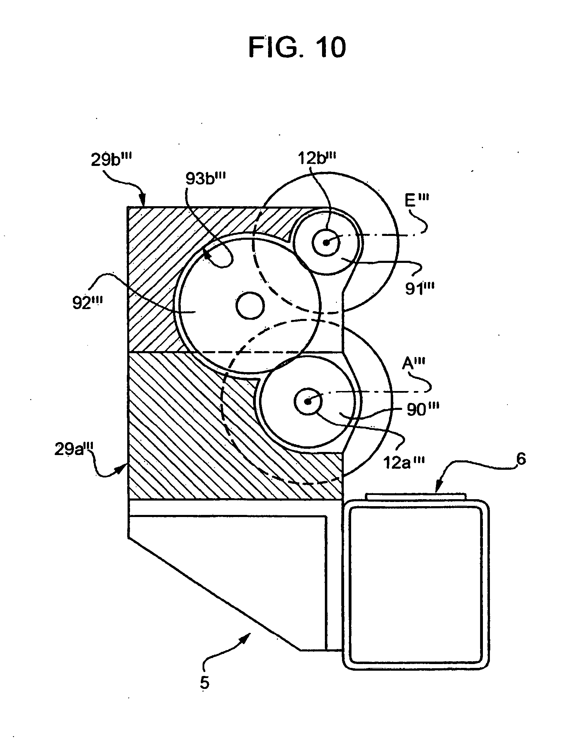

With reference to figures. 9 and 10, 4'" indicates a fourth embodiment of conveying unit.

Conveying unit 4'" differs from conveying unit 4' for comprising neither motor 40b nor joint 41b.

Furthermore, conveying unit 4'" differs from conveying unit 4' for comprising:
- a gear 90'" driven in rotation by joint 41a'" and angularly integral with shaft 12a'" of worm-screw 11a'";
- a gear 91'" angularly integral with shaft 12b'" of worm-screw 11b"'; and
- an idler gear 92"' meshing with both gears 90'" and 91"'.

In particular, shafts 12a"', 12b'" of worm-screws 11a"', 11b"', are coaxial with respective gears 90"', 91"'.

Finally, conveying unit 4"' differs from conveying unit 4' in that each modular elements 1a"', 1b"' comprises:
- a pair of support element 20a"', 20b'" arranged at the end of worm-screws 11a"', 11b"' facing motor 40"'; and
- a block 29a"', 29b'" axially interposed between support elements 20a"', 20b'" arranged at the end of worm-screws 11a"', 11b'" facing motor 40".

Blocks 29a'" define together with block 29b'" define relative cavities 93'" housing gears 90"', 91''', 92'''.

The operation of conveying unit 4''' differs from the operation of conveying unit 4' in that both worm-screws 11a"', 11b"' are driven in rotation by same motor 40a"'.

More precisely, motor 40a'" drives joint 41a"', which drives in rotation gear 90"'. Gear 90'" drives in rotation both shaft 12a'" of worm-screw 11a"' and gear 91"'. Gear 91'" drives in rotation gear 92'" which, in turn, drives in rotation shaft 12b'" of worm-screw 11b"'.

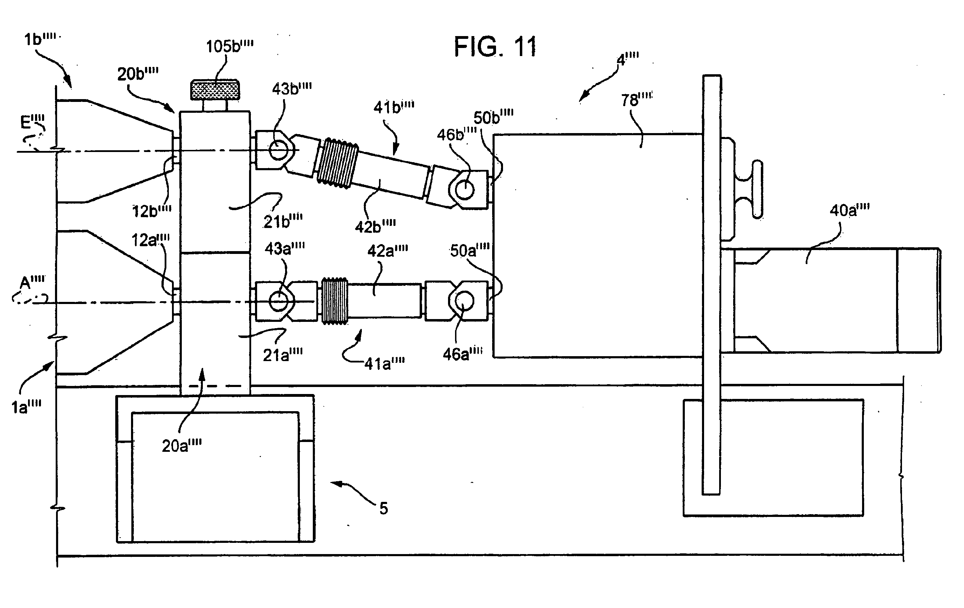

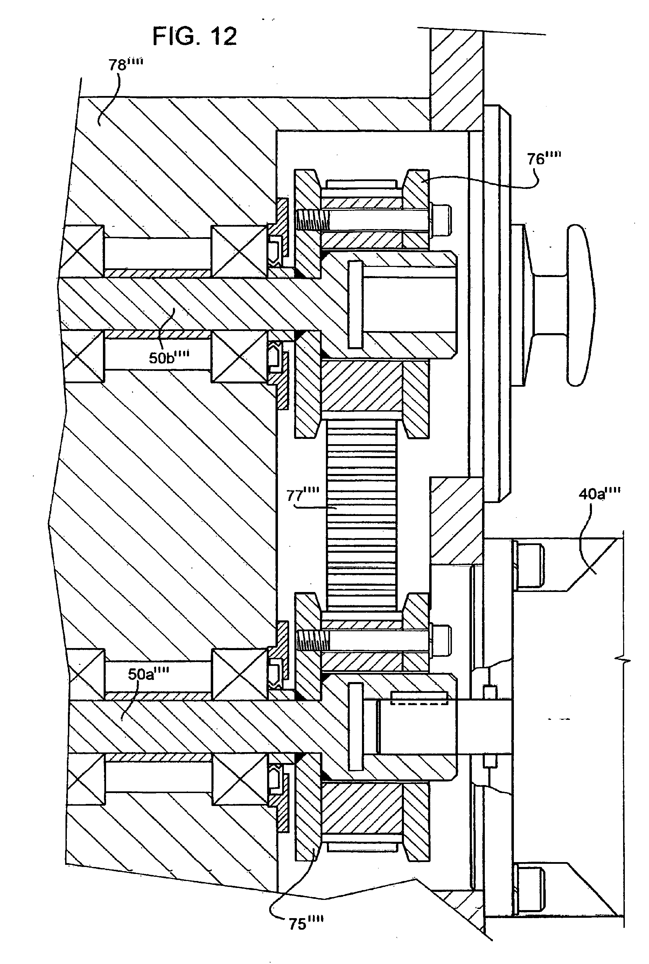

With reference to figures 11 and 12, 4"" indicates a fourth embodiment of conveying unit.

Conveying unit 4"" is similar to conveying unit 4' and will be disclosed hereinafter only insofar as it differs from the latter; corresponding parts or equivalents of conveying units 4"", 4' will be indicated, where possible, by the same reference numerals.

Conveying unit 4"" differs from conveying unit 4' for comprising only one motor 40a"" for driving in rotation both worm-screw 11a"" of modular element 1a"" and worm-screw 11b'" of modular element 1b"".

Furthermore, conveying unit 4"" differs from conveying unit 4" for comprising:
- a pulley 75"" driven in rotation by output shafts of motor 40a"" and driving in rotation a shaft 50a"';
- a pulley 76"" connected to a shaft 50b""; and
- a belt 77"" wound on pulleys 75"", 76"".

More precisely, shafts 42a"", 42b"" of joint 41a"", 41b"" are articulated via cardan joint 46a"" , 46b"" respectively onto shafts 50a"", 50b"".

Pulleys 75"", 76"" and belt 77"" are housed within a housing 78"".

The operation of conveying unit 4"" differs from conveying unit 4' in that motor 40a"" drives in rotation pulley 75"".

Pulley 75"" drives both shaft 42a"' of joint 41a'''' and belt 77'''', which in turn, drives pulley 76''''.

Joint 41a'''' drives in rotation worm-screw 11b'''' about axis E'''' while pulley 76.'''' drives shaft 42b''' of joint 41b''''.

Joint 41b''' drives, in turn, in rotation worm-screw 11b''''.

From an analysis of the features of modular element 1a, 1b, 1a', 1b', 1a'', 1b'', la''', 1b''', 1a'''', 1b'''' and of modular element 60a, 6.0b made according to the present invention, the advantages it allows to obtain are apparent.

In particular, modular element 1a, 1b; 1a', 1b'; 1a'', 1b''; 1a''', 1b'''; 1a'''', 1b'''' allows to arrange axis A (E) of worm-screw 11a, 11b; 11a', 11b'; 11a'', 11b''; 11a''', 11b'''; 11a'''', 11b'''' at designed distances L₁, L₂, M₁, M₂, N_{1'}, N₂', O₁, O₂' from axis D measured parallel to axis B, B'; C, C'; F, F' and G, G', on the basis of the format of containers 3 to be conveyed.

Accordingly, it is sufficient to replace modular elements 1a (1b) with new modular elements 1a (1b) arranging axis A (E) of worm-screw 11a (11b) at different distances L₁, L₂, M₁, M₂, N_{1'}, N₂', O₁, O₂' from axis D in order to reconfigure conveying unit 4, 4' , 4'', 4''', 4'''' for a new format of containers 3.

In this way, modular element 1a, 1b; 1a', 1b'; 1a'', 1b'' ; 1a''', 1b'''; 1a'''', 1b'''' arranges containers 3 at an ideal position relative to worm-screw 11a, 11b; 11a', 11b'; 11a'', 11b'' ; 11a''' , 11b''' ; 11a'''', 11b''''.

In a completely analogous way, modular element 60a (60b) allows to arrange guide 66a (66b) at designed distances N₁ and N₂ (O₁ and O₂) from axis D measured parallel to axis B and C (F and G), on the basis of the format of containers 3 to be conveyed.

Resulting conveying unit 4, 4', 4'', 4''', 4'''' is therefore highly modular and can be reconfigured without requiring highly skilled personnel for processing containers 3 of different format.

As the risk that operator errors result could result in a damage of containers 3 is highly reduced, conveying unit 4, 4', 4'', 4''',, 4'''' are particularly advantageous for conveying even containers 3 with delicate surface at very high speeds.

Furthermore, modular element 1a, 1b; 1a', 1b'; 1a'', 1b''; 1a''', 1b'''; 1a'''' , 1b'''' and 60a, 60b do not impinge the general structure of conveying unit 4, 4' 4'' 4''', 4''''.

Conveying unit 4''', 4'''' requires only one motor 40a''', 40a'''' for driving in rotation both worm-screws 12a''', 11b''' and 11a'''', 11b''''.

Accordingly, conveying unit 4''', 4'''' does not require additional spaces and infra-structure for housing a further motor.

In this way, conveying unit 4'''' may be reconfigured without requiring additional spaces for housing a plurality of motors 40a''''.

Even, conveying unit 4''' requires only one joint 41a''' for driving in rotation both worm-screws 11a''', 11b'''.

Accordingly, conveying unit 4''' conveys containers 3 in a particularly economic way.

Finally, it is apparent that modifications and variants not departing from the scope of protection of the claims may be made to modular element 1a, 1b, 1a', 1b', 60a, 60b.

In particular, conveying unit 4, 4' , 4'', 4''', 4'''' could comprise only one modular element 1a (1b), 1a' (1b'), 1a'' (1b''), 1a''' (1b''') , 1a'''' (1b'''').

Conveying unit 4 could comprise only one modular element 60a, 60b.

Conveying unit 4, 4', 4'' could comprise only one motor 40a for driving in rotation both worm-screws 11a, 11b; 11a' , 11b' ; 11a'', 11b" .

In this case, motor 40a could be connected to worm-screws 11a, 11b; 11a', 11b'; 11a'', 11b'' either by:
- only one joint 41a''' and gears 90''', 91''', 92'''; or
- two joints 41a'''', 41b'''' driven respectively by pulleys 75'''', 76'''' and belt 77''''.

Conveying unit 4''', 4'''' could comprise one or more modular element 60a, 60b instead of modular elements 1a', 1b'.

Conveying unit 4, 4'', 4''', 4'''' could comprise protrusion 17a", 17b'', grooves 16a'', 16b'', screws 67a'' , 69a" and holes 68a''.

Finally, conveying unit 4, 4'', 4''', 4'''' could comprise other coupling means for rendering respective plates 19a, 19b; 19a'', 19b'' slidable with respect to corresponding plates 18a, 18b; 18a'', 18b''.

## Claims

1. Modular replaceable element (1a, 1b; 1a', 1b' ; 1a'', 1b''; 1a''', 1b'''; 1a'''', 1b'''') for a container processing machine (2), **characterized by** comprising:
- at least one first support element (20a, 20b; 20a', 20b'; 20a''', 20b''');
- first releasable connecting means (30a, 30a') for releasably connecting said first support element (20a, 20b; 20a', 20b'; 20a''', 20b''') to either a fixed structure (5) of said container processing machine (2) or to a further support element (20b, 20a; 20b', 20a' ; 20b''', 20a''') of a further modular element (1b, 1a; 1b', 1a' ; 1b'', 1a''; 1b''', 1a'''; 1b'''', 1a'''') ; and
- at least one first worm-screw (11a, 11b; 11a', 11b' ; 11a''', 11b''' ; 11a'''' , 11b'''') which may rotate about a first axis (A, E; A', E' ; A'''', E'''') with respect to said first support element (20a, 20b; 20a', 20b' ; 20a''', 20b'''), and is adapted to cooperate with a first portion (8a, 8b) of at least two containers (3) advancing on a conveyor (6) in order to distance them at a given pitch;
said first worm-screw (11a, 11b; 11a', 11b'; 11a''' , 11b'''; 11a'''', 11b'''') being fixed relative to said first support element (20a, 20b; 20a', 20b'; 20a''', 20b''') with respect to a second axis (B, F; B' , F') transversal to said first axis (A, E; A', E' ; A'''', E'''') and with respect to a third axis (C, G; C', G') transversal to said first axis (A, E; A', E'; A'''', E'''') and said second axis (B, F; B' , F') ;
said at least one first support element (20a, 20b; 20a', 20b'; 20a''', 20b''') supporting said first axis (A, E; A', E'; A'''', E'''') of said first worm-screw (11a, 11b; 11a' , 11b' ; 11a''' , 11b'''; 11a''', 11b'''') at a first distance (L₁, M₁, N₁', O₁') from a fourth fixed reference axis (D) measured parallel to said second axis (B, F; B', F') and at a second distance (L₂, M₂, N₂', O₂') from said fourth axis (D) measured parallel to said third axis (C, G; G', G');
at least one between said first and second distances (L₁, L₂; M₁, M₂; N₁', N₂'; O₁', O₂') being associated to the format of said containers (3) to be conveyed.

2. The modular replaceable element according to claim 1, **characterized by** comprising a pair of said first support elements (20a, 20b; 20a', 20b'; 20a''', 20b''') arranged on respective opposite axial sides with respect to said first axis (A, E; A', E'; A'''', E'''') of said first worm screw (11a, 11b; 11a', 11b'; 1a''', 1b''' ; 11a'''', 11b'''').

3. The modular replaceable element according to claim 1 or 2, **characterized in that** said first support element (20a, 20b; 20a', 20b'; 20a''', 20b''') comprises:
- a first main portion (21a, 21b) carrying said first releasable connecting means (30a, 30b); and
- a first end portion (22a, 22b) connected to said first main portion (21a, 21b) and defining an apex (23a, 23b) which protrudes, in use, towards said further conveyor (6); said first worm-screw (11a, 11b; 11a', 11b' ; 11a''', 11b'''; 11a'''', 11b'''') being rotatably fitted to said apex (23a, 23b) about said first axis (A, E; A', E' ; A'''' , E'''').

4. A conveying unit (4), comprising:
- a first motor (40a, 40b, 40a''', 40a'''') ; and
- at least one first replaceable modular element (1a, 1b; 1a', 1b'; 1a'''' , 1b'''; 1'''', 1'''') according to anyone of previous claims;
- a first motion transmission element (41a, 41a''', 41a''''; 41b) functionally interposed between said first worm-screw (11a, 11b; 11a', 11b'; 11a''', 11b'''; 11a'''', 11b'''') of said modular element (1a, 1b; la', 1b' ; 1a''', 1b'''; 1a'''', 1b'''') and said first motor (40a, 40b, 40a'''', 40a'''') ;
said transmission element (41a, 41b, 41a''', 41a'''') being capable of transmitting the motion between two directions parallel or coincident to one another.

5. The conveying unit according to claim 4, **characterized in that** said transmission element (41a, 41a''', 41a''''; 41b) is a first joint (41a, 41a''', 41a''''; 41b) which comprises a first shaft (42a, 42a'''', 42a'''', 42b) ;
said first shaft (42a, 42a''' , 42a'''', 42b) being connected with a first output shaft of said first motor (40a, 40b, 40a''', 40a'''') through a first cardan joint (46a, 46a''', 46a'''', 46b) and being connected with said first worm-screw (11a, 11b; 11a', 11b'; 11a'''', 11b'''; 11a'''', 11b'''') through a second cardan joint (43a, 43a''', 43a'''', 43b).

6. The conveying unit according to claim 4 or 5, **characterized by** comprising:
- a second modular replaceable element (1b, 1a; 1b', 1a'; 1b'', 1a''; 1b''', 1a'''; 1b'''', 1a'''') comprising, in turn, at least one second support element (20b, 20a; 20b', 20a'; 20b'', 20a''; 20b''', 20a'''; 20b'''', 20a'''') and a second worm-screw (11b, 11a; 11b', 11a'; 11b'', 11a''; 11b''', 11a'''; 11b'''', 11a'''') which may rotate about a fifth axis (E, A; E', A' ; E'''' ; A'''') with respect to said second support element (20b, 20a; 20b', 20a'; 20b'', 20a''; 20b''', 20a''');
said second worm-screw (11b, 11a; 11b', 11a'; 11b'', 11a''; 11b''', 11a'''; 11b'''', 11a'''') being adapted to cooperate with a second portion (8b, 8a) of at least said two containers (3);
said second worm-screw (11b, 11a; 11b', 11a'; 11b'', 11a''; 11b''', 11a'''; 11b'''', 11a'''') being fixed relative to said at least one second support element (20b, 20a; 20b', 20a'; 20b'', 20a''; 20b''', 20a''') with respect to a sixth axis (F; B) transversal to said fifth axis (E, A; E', A'; E''''; A'''') and with respect to a seventh axis (G, C; G', C') transversal to said fifth and sixth axis (F, B; F', B');
said first and second support element (20b, 20a ; 20b', 20a'; 20b'', 20a''; 20b''', 20a''') respectively comprising second and third releasable connecting means (36b, 36b'; 30a, 30a') releasably connected to one another;
said second support element (20b, 20b'; 20a, 20a') supporting said fifth axis (E, A; E', A'; E''''; A'''') of said second worm-screw (11b, 11a; 11b, 11a'; 11b'', 11a'' ; 11b''', 11a'''; 11b'''', 11a'''') at a third distance (M₁; L₁; O₁' ; N₁') from said fourth axis (D) measured parallel to said second axis (B; F) and at a fourth distance (M₂; L₂; O₂'; N₂') from said fourth axis (D) measured parallel to said third axis (C; G);
at least one between said third and fourth distances (M₁, M₂; L₁, L_{2;} O₁'; O₂'. N₁'; N₂') being associated to the format of said containers (3) to be conveyed.

7. The conveying unit according to claim 6, **characterized in that**:
- said first modular replaceable element (1a, 1b; 1a', 1b' ; 1a'', 1b''; 1a''', 1b'''; 1a'''', 1b'''') comprises a first shaft (12a, 12b; 12a', 12b'; 12a''', 12b''' ; 12a'''', 12b''''), which is rotatably supported by said first support element (20a, 20b; 20a', 20b'; 20a'', 20b''; 20a''', 20b''') about said first axis (A, E; A', E'; A''', E'''') and is integrally rotatable together with said first worm-screw (11a, 11a'; 11b, 11b') about said first axis (A, E; A', E'; A'''', E'''') ;
- said second modular replaceable element (1b, 1a; 1b', 1a'; 1b'', 1a''; 1b''', 1a'''; 1b'''', 1a'''') comprises a second shaft (12b, 12a; 12b', 12a'; 12b''', 12a''' ; 12b'''', 12a''''), which is rotatably supported by said second support element (20b, 20b'; 20a, 20a') about said fifth axis (E, A; E', A' ; E'''', A'''') and integrally rotatable together with said second worm-screw (11b, 11a; 11b', 11a' ; 11b'', 11a''; 11b''', 11a''' ; 11b'''', 11a'''') about said fifth axis (E, A; E', A' ; E'''', A'''').

8. The conveying unit according to claim 7, **characterized by** comprising:
- a first gear (90''') rotatable integrally with said first shaft (12a''') and driven in rotation, in use, by said first motor (40a'''); and
- a second gear (91''') rotatable integrally with said second shaft (12b'''); and
- a third gear (92''') meshing with said first and second gears (90''', 91''') ;
and/or **characterized by** comprising a second joint (41b, 41b'''') connected to said second worm-screw (11b, 11a; 11b', 11a'; 11b'' , 11a'' ; 11b''', 11a'''; 11b'''', 11a'''' ).

9. The conveying unit according to claim 8, **characterized by** comprising:
- a first pulley (75'''') operatively connected to said first motor (40a'''') and said first joint (41a'''') ;
- a second pulley (76'''') operatively connected to said second joint (41b'''') ; and
- a belt (77'''') wound onto said first and second pulleys (75'''', 76'''').

10. The conveying unit according to anyone of claims 4 to 9, **characterized by** comprising:
- a third modular replaceable element (60a, 60b);
said third modular element (60a, 60b) comprising, in turn,:
- at least one third support element (65a, 65b);
- fourth releasable connecting means (71a, 71b) for releasably connecting said third support element (65a, 65b) either to said fixed structure (5) or to a fourth support element (65b, 65a);
- at least one fixed guide (66a, 66b) adapted to cooperate with a third portion (9a, 9b) of said containers (3) advanced by said conveyor (6);
said guide (66a, 66b) being arranged at a fifth distance (N₁, O₁) from said fourth axis (D) measured parallel to said second axis (B), and a at a sixth distance (N₂, O₂) from said fourth axis (D) measured parallel to said third axis (C);
at least one between said fifth and sixth distance (N₁, O₁; N₂, O₂) being associated to the format of said containers (3) to be conveyed;
and/or **characterized in that** said first support element (20a, 20b; 20a', 20b'; 20a''', 20b''') may slide relative to said fixed structure (5).

11. A container processing machine, comprising:
- at least one star wheel (7); and
- a conveying unit (4, 4', 4'', 4''', 4'''') according to any one of claims 4 to 10 and arranged upstream from said star wheel (7).

12. A series of conveying units (4, 4', 4'', 4''', 4'''') for a container processing machine (2), **characterized in that** each conveying unit (4, 4', 4'', 4''', 4"") comprises a modular replaceable element (1a, 1b; 1a', 1b'; 1a'', 1b''; 1a''', 1b'''; 1a'''', 1b'''');
said modular replaceable element (1a, 1b; 1a', 1b'; 1a'', 1b''; 1a"', 1b'''; 1a'''', 1b'''') comprising:
- at least one first support element (20a, 20b; 20a' , 20b' ; 20a''', 20b''');
- first releasable connecting means (30a; 30a') for releasably connecting said first support element (20a, 20b; 20a', 20b'; 20a"', 20b"') either to a fixed structure (5) of said container processing machine (2) or to a second support element (20b, 20a; 20b', 20a'; 20b''', 20a''');
- at least one first worm-screw (11a, 11b; 11a', 11b'; 11a''', 11b'''; 11a'''', 11b'''') which may rotate about a first axis (A, E; A', E'; A'''', E''") with respect to said first support element (20a, 20a'; 21b, 21b'), and is adapted with cooperate with a first portion (8a, 8b) of at least two containers (3) advancing on a conveyor (6) along a second axis (D) parallel to said first axis (A, E; A', E'; A'''', E'''') in order to distance them at a given pitch;
said first worm-screw (11a, 11b; 11a', 11b'; 11a"', 11b"'; 11a"", 11b"") being fixed relative to said first support element (20a, 20b; 20a', 20b'; 20a"', 20b''') with respect to a third axis (B, F; B' , F') transversal to said first axis (A, E; A', E'; A'''', E'''') and with respect to a fourth axis (C, G; C', G') transversal to said first axis (A, E; A', E'; A'''', E'''') and said third axis (B, F; B', F') ;
said at least one first support element (20a, 20a'; 20b, 20b') supporting said first axis (A, E; A', E'; A'''', E"") of relative said first worm-screw (11a, 11b; 11a' , 11b'; 11a''', 11b'''; 11a'''', 11b'''') at a relative first distance (L₁, M₁, N₁', O₁') from said second axis (D) measured parallel to said relative third axis (B, F; B', F') and at a relative second distance (L₂, M₂, N₂", O₂') from said fourth axis (D) measured parallel to said third axis (C, G; C', G');
at least one between said first and second distances (L₁, L_{2;} M₁, M₂; N₁', N₂'; O₁', O₂') being associated to the format of relative said containers (3) to be conveyed.

13. A series of conveying units (4, 4' , 4'', 4''', 4'''') according to claim 12, **characterized in that** each conveying unit (4, 4', 4'', 4''', 4'''') comprises a second modular replaceable elements (1b, 1a; 1b', 1a'; 1b'', 1a''; 1b''', 1a'''; 1b'''', 1a'''');
said second modular replaceable element (1b, 1a; 1b', 1a'; 1b'' , 1a" ; 1b''', 1a"'; 1b'''', 1a"") comprising, in turn,:
- a second support element (20b, 20b'; 20a, 20a'); and
- a second worm-screw (11b, 11a; 11b', 11a'; 11b'', 1a''; 11b''', 11a'''; 11b'''', 11a'''') which may rotate about a fifth axis (E, A; E', A'; E'"'; A'''') with respect to said second support element (20b, 20b'; 20a, 20a');
said second worm-screw (11b, 11a; 11b', 11a'; 11b" , 11a''; 11b''', 11a'''; 11b'''', 11a'''') being fixed relative to said at least one said second support element (20b, 20b'; 20a, 20a') with respect to a sixth axis (F; B) transversal to said fifth axis (E, A; E', A'; E''''; A'''') and with respect to a seventh axis (G; C) transversal to said sixth axis (F; B) and said fifth axis (E, A; E', A'; E''''; A'''');
said at least one first and second support element (20a, 20a'; 20b, 20b') respectively comprising second and third releasable connecting means (36b, 36b'; 30a, 30a') releasably connected to one another;
said fifth axis (E, A; E', A'; E''''; A'''') being arranged at a third distance (M₁, L₁; O₁', N₁') from said fourth axis (D) and at a fourth distance (M₂, L₂ O₂, N₂) from said fourth axis (D);
at least one between said third and fourth distance (M₁, M_{2;} L₁, L₂) being associated to the format of the containers (3) to be conveyed.

14. A series of conveying units according to claim 12 or 13, **characterized in that** each conveying unit (4) comprises a third modular replaceable element (60a, 60b) comprising, in turn,:
- at least one fixed guide (66a, 66b) adapted to cooperate with a third portion (9a, 9b) of said containers (3) advancing parallel to said first axis (A, E; A', E'; A'''', E''''); and
- at least one third support element (60a, 60b) which comprises fourth releasable connecting means (71a; 71b) for releasably connecting said third support element (60a; 60b) to either said fixed structure (5) or to a fourth support element (60b; 60a);
said guide (66a; 66b) being arranged at a fifth distance (N₁; O₁) from said fourth axis (D) measured parallel to said second axis (B), and at a sixth distance (N₂; O₂) from said fourth axis (D) measured parallel to said third axis (C);
at least between said fifth and said sixth distance (N₁, N₂; O₁, O₂) being associated to the format of said containers (3) to be conveyed.

15. Method for adapting a conveying unit (4, 4', 4'', 4''', 4''') for a container processing machine (2) to a different format of containers (3), said conveying unit (4, 4', 4'', 4''', 4''') comprising:
- a modular replaceable element (1a, 1b; 1a', 1b', 1a", 1b'', 1a''', 1b''', 1a'''', 1b'''')
- a fixed structure (5);
- at least one first worm-screw (11a, 11b; 11a', 11b'; 11a''', 11b'''; 11a'''', 11b'''') which may rotate relative to said fixed structure (5) about a first axis (A, E; A', E'; A"'', E''");
said first worm-screw (11a, 11b; 11a', 11b'; 11a"', 11b'''; 11a'''', 11b'''') being adapted to cooperate with a first portion (8a, 8b) of said containers (3) advancing parallel to said first axis (A, E; A' , E'; A'''', E'''') in order to distance them at a given pitch, said method being **characterized by** comprising the steps of:
choosing a new modular element support element (1a, 1b; 1a', 1b'; 1a'', 1b''; 1a''', 1b'''; 1a'''', 1b'''') to replace modular rotatably supporting said first worm-screw (11a, 11b; 11a', 11b'; 11a''', 11b'''; 11a'''', 11b'''') about said first axis (A, E; A', E' ; A"", E''") on the basis of at least one between a first distance (L₁; M₁) between said first axis (A, E; A', E' ; A'''', E'''') and a fixed second reference axis (D) measured parallel to a third axis (B, B') transversal to said first axis (A, E; A', E'; A'''', E''''), and a second distance (L₂; M₂) between said first axis (A, E; A' , E' ; A'''', E'''') and said second reference axis (D) measured parallel to a fourth axis (C, C') transversal to both said first and second axes (A, B); and
- releasably connecting said new modular support element (1a, 1b; 1a', 1b'; 1a'', 1b'' ; 1a''', 1b'''; 1a'''', 1b"") to said fixed structure (5).

## Patentansprüche

1. Auswechselbares modulares Element (1a, 1b; 1a', 1 b'; 1 a", 1 b"; 1a"', 1b"'; 1a"", 1b"") für eine Behälterverarbeitungsmaschine (2), **dadurch gekennzeichnet, dass** es aufweist:
- mindestens ein erstes Trägerelement (20a, 20b; 20a', 20b'; 20a"', 20b"');
- erste lösbare Verbindungseinrichtungen (30a, 30a') zur lösbaren Verbindung des ersten Trägerelements (20a, 20b; 20a', 20b'; 20a"', 20b"') entweder mit einer festen Struktur (5) der Behälterverarbeitungsmaschine (2) oder mit einem weiteren Trägerelement (20b, 20a; 20b', 20a'; 20b"', 20a"') eines weiteren modularen Elements (1 b, 1 a; 1 b', 1 a'; 1 b", 1 a"; 1 b"', 1a"'; 1b"", 1a""); und
- mindestens eine erste Schnecke (11a, 11b; 11a', 11b'; 11a"', 11b"'; 11a"", 11b""), die in Bezug auf das erste Trägerelement (20a, 20b; 20a', 20b'; 20a"', 20b"') um eine erste Achse (A, E; A', E'; A"", E"") drehen kann und geeignet ist, um mit einem ersten Abschnitt (8a, 8b) von mindestens zwei sich auf einer Fördereinrichtung (6) vorwärts bewegenden Behältern (3) zusammenzuwirken, um sie mit einem gegebenen Zwischenraum in Abstand zu halten;
wobei die erste Schnecke (11 a, 11 b; 11 a', 11 b'; 11 a"', 11b"'; 11a"", 11b"") in Bezug auf das erste Trägerelement (20a, 20b; 20a', 20b'; 20a"', 20b"') bezüglich einer zweiten Achse (B, F; B', F') quer zur ersten Achse (A, E; A', E'; A"", E"") und bezüglich einer dritten Achse (C, G; C', G') quer zur ersten Achse (A, E; A', E'; A"", E"") und zur zweiten Achse (B, F; B'; F') fest ist;
wobei das mindestens eine erste Trägerelement (20a, 20b; 20a', 20b'; 20a"', 20b"') die erste Achse (A, E; A', E'; A"", E"") der ersten Schnecke (11a, 11b; 11a', 11b'; 11a"', 11b"'; 11a"", 11b"") in einem ersten Abstand (L₁, M₁, N₁', O₁') zu einer vierten festen Bezugsachse (D) gemessen parallel zur zweiten Achse (B, F; B', F') und in einem zweiten Abstand (L₂, M₂, N₂', O₂') zur vierten Achse (D) gemessen parallel zur dritten Achse (C, G; C', G') trägt;
wobei mindestens einer der ersten und zweiten Abstände (L₁, L₂; M₁, M₂; N₁', N₂'; O₁', O₂') mit dem Format der zu befördernden Behälter (3) verknüpft ist.

2. Auswechselbares modulares Element nach Anspruch 1, **dadurch gekennzeichnet, dass** es ein Paar der ersten Trägerelemente (20a, 20b; 20a', 20b'; 20a"', 20b"') auf gegenüberliegenden axialen Seiten bezüglich der ersten Achse (A, E; A', E'; A"", E"") der ersten Schnecke (11 a, 11 b; 11a', 11b'; 11a"', 11b"'; 11a"", 11b"") angeordnet aufweist.

3. Auswechselbares modulares Element nach Anspruch 1 oder 2, **dadurch gekennzeichnet, dass** das erste Trägerelement,(20a, 20b; 20a', 20b'; ,20a"', 20b"') aufweist:
- einen ersten Hauptabschnitt (21 a, (21 b), der die ersten lösbaren Verbindungseinrichtungen (30a, 30b) trägt; und
- einen ersten Endabschnitt (22a, 22b), der mit dem ersten Hauptabschnitt (21 a, 21 b) verbunden ist und einen Scheitel (23a, 23b) definiert, der im Gebrauch zur weiteren Fördereinrichtung (6) vorsteht; wobei die erste Schnecke (11a, 11b; 11a', 11b'; 11a"', 11b"'; 11a"", 11b"") am Scheitel (23a, 23b) um die erste Achse (A, E; A', E'; A"", E"") drehbar angebracht ist.

4. Förderanlage (4), die aufweist:
- einen ersten Motor (40a, 40b, 40a"', 40a""); und
- mindestens ein erstes auswechselbares modulares Element (1 a, 1 b; 1a', 1b'; 1a"', 1b"'; 1a""; 1b"") nach einem der vorhergehenden Ansprüche;
- ein erstes Bewegungsübertragungselement (41a, 41a"', 41a""; 41b), das funktional zwischen die erste Schnecke (11a, 11b; 11a', 11b'; 11a"', 11b"'; 11a"", 11b"") des modularen Elements (1a, 1b; 1a', 1b'; 1a"', 1b"'; 1a"", 1b"") und den ersten Motor (40a, 40b, 40a"', 40a"") eingefügt ist; wobei das Übertragungselement (41a, 41b, 41a"', 41a"") die Bewegung zwischen zwei zueinander parallelen oder zusammenfallenden Richtungen übertragen kann.

5. Förderanlage nach Anspruch 4, **dadurch gekennzeichnet, dass** das Übertragungselement (41a, 41a"', 41a""; 41b) ein erstes Gelenk (41a, 41a"', 41a""; 41b) ist, das eine erste Welle (42a, 42a"', 42a"", 42b) aufweist; wobei die erste Welle (42a, 42a"', 42a"", 42b) mit einer ersten Ausgangswelle des ersten Motors (40a, 40b, 40a"', 40a"") über ein erstes Kardangelenk (46a, 46a"', 46a"", 46b) verbunden und mit der ersten Schnecke (11a, 11b; 11a', 11b'; 11a"', 11b"'; 11a"", 11b"") über ein zweites Kardangelenk (43a, 43a"', 43a"", 43b) verbunden ist.

6. Förderanlage nach Anspruch 4 oder 5, **dadurch gekennzeichnet, dass** sie aufweist:
- ein zweites auswechselbares modulares Element (1b, 1a; 1b', 1a'; 1b", 1a"; 1b"', 1a"'; 1b"", 1a""), das seinerseits mindestens ein zweites Trägerelement (20b, 20a; 20b', 20a'; 20b", 20a"; 20b"', 20a"'; 20b"", 20a"") und eine zweite Schnecke (11b, 11a; 11b', 11a'; 11b", 11a"; 11b"', 11a"'; 11b"", 11a"") aufweist, die um eine fünfte Achse (E, A; E', A'; E""; A"") bezüglich des zweiten Trägerelements (20b, 20a; 20b', 20a'; 20b", 20a"; 20b"', 200a"') drehen kann;
wobei die zweite Schnecke (11b, 11a; 11b', 11a'; 11b", 11a"; 11b"', 11a"'; 11b"", 11a"") geeignet ist, um mit einem zweiten Abschnitt (8b, 8a) mindestens der zwei Behälter (3) zusammenzuwirken;
wobei die zweite Schnecke (11b, 11a; 11b', 11a'; 11b", 11a"; 11b"', 11a"'; 11b"", 11a"") in Bezug auf das mindestens eine zweite Trägerelement (20b, 20a; 20b', 20a'; 20b", 20a"; 20b"', 20a"') bezüglich einer sechsten Achse (F; B) quer zur fünften Achse (E, A; E', A'; E""; A"") und bezüglich einer siebten Achse (G, C; G', C') quer zur fünften und sechsten Achse (F, B; F', B') fest ist;
wobei das erste und zweite Trägerelement (20b, 20a; 20b', 20a'; 20b", 20a"; 20b"', 20a"') je zweite und dritte lösbare Verbindungseinrichtungen (36b, 36b'; 30a, 30a') aufweisen, die lösbar miteinander verbunden sind; wobei das zweite Trägerelement (20b, 20b'; 20a, 20a') die fünfte Achse (E, A; E', A'; E""; A"") der zweiten Schnecke (11b, 11a; 11b, 11a'; 11b", 11a"; 11b"', 11a"'; 11b"", 11a"") in einem dritten Abstand (M₁; L₁; O₁'; N₁') zur vierten Achse (D) gemessen parallel zur zweiten Achse (B; F) und in einem vierten Abstand (M₂; L₂; O₂'; N₂') zur vierten Achse (D) gemessen parallel zur dritten Achse (C; G) trägt;
wobei mindestens einer der dritten und vierten Abstände (M₁, M₂; L₁, L₂; O₁', O₂'; N₁'; N₂') mit dem Format der zu befördernden Behälter (3) verknüpft ist.

7. Förderanlage nach Anspruch 6, **dadurch gekennzeichnet, dass**:
- das erste auswechselbare modulare Element (1 a, 1 b; 1 a', 1 b'; 1 a", 1b"; 1a"', 1b"'; 1a"", 1b"") eine erste Welle (12a, 12b; 12a', 12b'; 12a"', 12b"'; 12a"", 12b"") aufweist, die vom ersten Trägerelement (20a, 20b; 20a', 20b'; 20a", 20b"; 20a"', 20b"') um die erste Achse (A, E; A', E'; A"", E"") drehbar getragen wird und integral zusammen mit der ersten Schnecke (11 a, 11 a'; 11 b, 11 b') um die erste Achse (A, E; A', E'; A"", E"") drehbar ist;
- das zweite auswechselbare modulare Element (1 b, 1 a; 1 b', 1 a'; 1 b", 1a"; 1b"', 1a"'; 1b"", 1a"") eine zweite Welle (12b, 12a; 12b', 12a'; 12b"', 12a"'; 12b"", 12a"") aufweist, die vom zweiten Trägerelement (20b, 20b'; 20a, 20a') um die fünfte Achse (E, A; E', A'; E"", A"") drehbar getragen wird und integral zusammen mit der zweiten Schnecke (11 b, 11 a; 11 b', 11 a'; 11b", 11a"; 11b"', 11a"'; 11b"", 11a"") um die fünfte Achse (E, A; E', A'; E"", A"") drehbar ist.

8. Förderanlage nach Anspruch 7, **dadurch gekennzeichnet, dass** sie aufweist:
- ein erstes Zahnrad (90"'), das integral mit der ersten Welle (12a"') drehbar ist und im Betrieb vom ersten Motor (40a"') in Drehung versetzt wird; und
- ein zweites Zahnrad (91"'), das integral mit der zweiten Welle (12b"') drehbar ist; und
- ein drittes Zahnrad (92"'), das mit dem ersten und zweiten Zahnrad (90"', 91"') in Eingriff ist;
und/oder **dadurch gekennzeichnet, dass** sie ein zweites Gelenk (41b, 41b"") aufweist, das mit der zweiten Schnecke (11 b, 11 a; 11 b', 11 a'; 11 b", 11 a"; 11b"', 11a"'; 11b"", 11a"") verbunden ist.

9. Förderanlage nach Anspruch 8, **dadurch gekennzeichnet, dass** sie aufweist:
- eine erste Riemenscheibe (75""), die mit dem ersten Motor (40a"") und dem ersten Gelenk (41 a"") in Wirkverbindung steht;
- eine zweite Riemenscheibe (76""), die mit dem zweiten Gelenk (41 b"") in Wirkverbindung steht; und
- einen Riemen (77""), der um die erste und die zweite Riemenscheibe (75"", 76"") gewickelt ist.

10. Förderanlage nach einem der Ansprüche 4 bis 9, **dadurch gekennzeichnet, dass** sie aufweist:
- ein drittes auswechselbares modulares Element (60a, 60b);
wobei das dritte modulare Element (60a, 60b) seinerseits aufweist:
- mindestens ein drittes Trägerelement (65a, 65b);
- vierte lösbare Verbindungseinrichtungen (71 a, 71 b) zur lösbaren Verbindung des dritten Trägerelements (65a, 65b) entweder mit der festen Struktur (5) oder mit einem vierten Trägerelement (65b, 65a);
- mindestens eine feste Führung (66a, 66b), die geeignet ist, um mit einem dritten Abschnitt (9a, 9b) der Behälter (3) zusammenzuwirken, die von der Fördereinrichtung (6) vorwärts geschoben werden;
wobei die Führung (66a, 66b) in einem fünften Abstand (N₁, O₁) zur vierten Achse (D) gemessen parallel zur zweiten Achse (B) und in einem sechsten Abstand (N₂, O₂) zur vierten Achse (D) gemessen parallel zur dritten Achse (C) angeordnet ist;
wobei mindestens einer der fünften und sechsten Abstände (N₁, O₁; N₂, O₂) mit dem Format der zu befördernden Behälter (3) verknüpft ist;
und/oder **dadurch gekennzeichnet, dass** das erste Trägerelement (20a, 20b; 20a', 20b'; 20a"', 20b"') in Bezug auf die feste Struktur (5) gleiten kann.

11. Behälterverarbeitungsmaschine, die aufweist:
- mindestens ein Sternrad (7); und
- eine Förderanlage (4, 4', 4", 4"', 4"") nach einem der Ansprüche 4 bis 10 und vor dem Sternrad (7) angeordnet.

12. Reihe von Förderanlagen (4, 4', 4", 4"', 4"") für eine Behälterverarbeitungsmaschine (2), **dadurch gekennzeichnet, dass** jede Förderanlage (4, 4', 4", 4"', 4"") ein auswechselbares modulares Element (1a, 1b; 1a', 1b'; 1a", 1b"; 1a"', 1b"'; 1a"", 1b"") aufweist;
wobei das auswechselbare modulare Element (1 a, 1 b; 1 a', 1b'; 1a", 1b"; 1a"', 1b"'; 1a"", 1b"") aufweist:
- mindestens ein erstes Trägerelement (20a, 20b; 20a', 20b'; 20a"', 20b"');
- erste lösbare Verbindungseinrichtungen (30a; 30a') zur lösbaren Verbindung des ersten Trägerelements (20a, 20b; 20a', 20b'; 20a"', 20b"') entweder mit einer festen Struktur (S) der Behälterverarbeitungsmaschine (2) oder mit einem zweiten Trägerelement (20b, 20a; 20b', 20a'; 20b', 20b"', 20a"');
- mindestens eine erste Schnecke (11a, 11b; 11a', 11b'; 11a"', 11b"'; 11a"", 11b""), die um eine erste Achse (A, E; A', E'; A"", E"") bezüglich des ersten Trägerelements (20a, 20a'; 21 b, 21 b') drehen kann, und die geeignet ist, um mit einem ersten Abschnitt (8a, 8b) von mindestens zwei Behältern (3) zusammenzuwirken, die sich auf einer Fördereinrichtung (6) entlang einer zweiten Achse (D) parallel zur ersten Achse (A, E; A', E'; A"", E"") vorwärts bewegen, um sie mit einem gegebenen Zwischenraum in Abstand zu halten;
wobei die erste Schnecke (11a, 11b; 11a', 11b'; 11a"', 11b"'; 11a"", 11b"") in Bezug auf das erste Trägerelement (20a, 20b; 20a', 20b'; 20a"', 20b"') bezüglich einer dritten Achse (B, F; B', F') quer zur ersten Achse (A, E; A', E'; A"", E"") und bezüglich einer vierten Achse (C, G; C', G') quer zur ersten Achse (A, E; A', E'; A"", E"") und zur dritten Achse (B, F; B', F') fest ist;
wobei das mindestens eine erste Trägerelement (20a, 20a'; 20b, 20b') die erste Achse (A, E; A', E'; A"", E"") der relativ ersten Schnecke (11 a, 11 b; 11a', 11b'; 11a"', 11b"'; 11a"", 11b"") in einem relativ ersten Abstand (L₁, M₁, N₁', O₁') zur zweiten Achse (D) gemessen parallel zur relativ dritten Achse (B, F; B', F') und in einem relativ zweiten Abstand (L₂, M₂, N₂', O₂') zur vierten Achse (D) gemessen parallel zur dritten Achse (C, G; C', G') trägt;
wobei mindestens einer der ersten und zweiten Abstände (L₁, L₂; M₁, M₂; N₁', N₂'; O₁', O₂') mit dem Format der zu befördernden relativen Behälter (3) verknüpft ist.

13. Reihe von Förderanlagen (4, 4', 4", 4"', 4"") nach Anspruch 12, **dadurch gekennzeichnet, dass** jede Förderanlage (4, 4', 4", 4"', 4"") ein zweites auswechselbares modulares Element (1 b, 1 a; 1 b', 1 a'; 1 b", 1 a"; 1b"', 1a"'; 1b"", 1a"") aufweist;
wobei das zweite auswechselbare modulare Element (1 b , 1 a; 1 b', 1 a'; 1 b", 1 a"; 1b"', 1a"'; 1b"", 1a"") seinerseits aufweist:
- ein zweites Trägerelement (20b, 20b'; 20a, 20a'); und
- eine zweite Schnecke (11 b, 11 a; 11 b', 11 a'; 11 b", 11 a"; 11b"', 11a"'; 11b"", 11a""), die um eine fünfte Achse (E, A; E', A'; E""; A"") bezüglich des zweiten Trägerelements (20b, 20b'; 20a, 20a') drehen kann;
wobei die zweite Schnecke (11 b, 11 a; 11 b', 11 a'; 11 b", 11 a"; 11b"', 11a"'; 11b"", 11a"") in Bezug auf das mindestens eine zweite Trägerelement (20b, 20b'; 20a, 20a') bezüglich einer sechsten Achse (F; B) quer zur fünften Achse (E, A; E', A'; E""; A"") und bezüglich einer siebten Achse (G; C) quer zur sechsten Achse (F; B) und zur fünften Achse (E, A; E', A'; E""; A"") fest ist;
wobei das mindestens eine erste bzw. zweite Trägerelement (20a, 20a'; 20b, 20b') zweite und dritte lösbare Verbindungseinrichtungen (36b, 36b': 30a, 30a') aufweist, die lösbar miteinander verbunden sind;
wobei die fünfte Achse (E, A; E', A'; E""; A"") in einem dritten Abstand (M₁, L₁; O₁', N₁') zur vierten Achse (D) und in einem vierten Abstand (M₂, L₂, O₂, N₂) zur vierten Achse (D) angeordnet ist;
wobei mindestens einer der dritten und vierten Abstände (M₁, M₂; L₁, L₂) mit dem Format der zu befördernden Behälter (3) verknüpft ist.

14. Reihe von Förderanlagen nach Anspruch 12 oder 13, **dadurch gekennzeichnet, dass** jede Förderanlage (4) ein drittes auswechselbares modulares Element (60a, 60b) aufweist, das seinerseits aufweist:
- mindestens eine feste Führung (66a, 66b), die geeignet ist, um mit einem dritten Abschnitt (9a, 9b) der Behälter (3) zusammenzuwirken, die sich parallel zur ersten Achse (A, E; A', E'; A"", E"") vorwärts bewegen; und
- mindestens ein drittes Trägerelement (60a, 60b), das vierte lösbare Verbindungseinrichtungen (71 a; 71 b) zur lösbaren Verbindung des dritten Trägerelements (60a; 60b) entweder mit der festen Struktur (5) oder mit einem vierten Trägerelement (60b; 60a) aufweist;
wobei die Führung (66a; 66b) in einem fünften Abstand (N₁; O₁) zur vierten Achse (D) gemessen parallel zur zweiten Achse (B) und in einem sechsten Abstand (N₂; O₂) zur vierten Achse (D) gemessen parallel zur dritten Achse (C) angeordnet ist;
wobei mindestens einer der fünften und sechsten Abstände (N₁, N₂; O₁, O₂) mit dem Format der zu befördernden Behälter (3) verknüpft ist.

15. Verfahren zur Anpassung einer Förderanlage (4, 4', 4", 4"', 4"') für eine Behälterverarbeitungsmaschine (2) an ein unterschiedliches Behälterformat (3), wobei die Förderanlage (4, 4', 4", 4"', 4"') aufweist:
- ein auswechselbares modulares Element (1 a, 1 b; 1 a', 1 b'; 1 a", 1 b"; 1a'", 1b"'; 1a"", 1b"");
- eine feste Struktur (5);
- mindestens eine erste Schnecke (11 a, 11 b; 11 a', 11 b'; 11 a"', 11 b"'; 11 a"", 11 b""), die in Bezug auf die feste Struktur (5) um eine erste Achse (A, E; A', E'; A"", E"") drehen kann;
wobei die erste Schnecke (11a, 11b; 11a', 11b'; 11a"', 11b"'; 11a"", 11b"") geeignet ist, um mit einem ersten Abschnitt (8a, 8b) der Behälter (3) zusammenzuwirken, die sich parallel zur ersten Achse (A, E; A', E'; A"", E"") vorwärts bewegen, um sie mit einem gegebenen Zwischenraum in Abstand zu halten, wobei das Verfahren **dadurch gekennzeichnet, dass** es die folgenden Schritte aufweist:
Wählen eines neuen auswechselbaren modularen Trägerelements (1 a, 1 b; 1 a', 1 b'; 1 a", 1 b"; 1a"', 1b"'; 1a"", 1b""), um das auswechselbare modulare Element (1a, 1b; 1a', 1b'; 1a", 1b"; 1a"', 1b"'; 1a"", 1b"") auszuwechseln, das die erste Schnecke (11 a, 11 b; 11 a', 11 b'; 11a"', 11b"'; 11a"", 11b"") um die erste Achse (A, E; A', E'; A"", E"") drehbar trägt, auf der Basis von mindestens einem von einem ersten Abstand (L₁; M₁) zwischen der ersten Achse (A, E; A', E'; A"", E"") und einer festen zweiten Bezugsachse (D) gemessen parallel zu einer dritten Achse (B, E') quer zur ersten Achse (A, E; A', E'; A"", E""), und einem zweiten Abstand (L₂; M₂) zwischen der ersten Achse (A, E; A', E'; A"", E"") und der zweiten Bezugsachse (D) gemessen parallel zu einer vierten Achse (C, C') quer zu den beiden ersten und zweiten Achsen (A, B); und
- lösbares Verbinden des neuen auswechselbaren modularen Trägerelements (1a, 1b; 1a', 1b'; 1a", 1b"; 1a"', 1b"'; 1a"", 1b" ") mit der festen Struktur (5).

## Revendications

1. Élément modulaire (1a, 1b ; 1a', 1b'; 1a", 1b" ; 1a"', 1b"' ; 1a"", 1b"") pour une machine de traitement de contenant (2), **caractérisé en ce qu'**il comprend :
- au moins un premier élément de support (20a, 20b ; 20a', 20b' ; 20a"', 20b"') ;
- des premiers moyens de raccordement libérable (30a, 30a') pour raccorder de façon libérable ledit premier élément de support (20a, 20b ; 20a', 20b' ; 20a"', 20b"') à une structure fixe (5) de ladite machine de traitement de contenant (2) ou à un élément de support supplémentaire (20b, 20a ; 20b', 20a' ; 20b"', 20a"') d'un élément modulaire supplémentaire (1b, 1a ; 1a' ; 1b", 1a" ; 1b"', 1a"' ; 1b"", 1a"") ; et
- au moins une première vis sans fin (11a, 11b ; 11a', 11b' ; 11a"', 11b"' ; 11a"", 11b,"') qui peut tourner autour d'un premier axe (A, E ; A', E' ; A"", E"") par rapport audit premier élément de support (20a, 20b ; 20a', 20b' ; 20a"', 20b"'), et est adapté pour coopérer avec une première partie (8a, 8b) d'au moins deux contenants (3) avançant sur un transporteur (6) afin de les espacer à un pas donné ; ladite première vis sans fin (11a, 11b ; 11a', 11b' ; 11a"', 11b"' ; 11a"", 11b"") étant fixe relativement audit premier élément de support (20a, 20b ; 20a', 20b' ; 20a"', 20b"') par rapport à un deuxième axe (B, F ; B', F') transversal audit premier axe (A, E ; A', E' ; A"", E"") et par rapport à un troisième axe (C, G ; C', G') transversal audit premier axe (A, E ; A', E' ; A"", E" ") et audit deuxième axe (B, F;B',F');
ledit au moins un premier élément de support (20a, 20b ; 20a', 20b' ; 20a"', 20b"') supportant ledit premier axe (A, E ; A', E' ; A"", E"") de ladite première vis sans fin (11a, 11b ; 11a', 11b' ; 11a"', 11b"' ; 11a"", 11b"") à une première distance (L₁, M₁, N₁', O₁') à partir d'un quatrième axe de référence fixe (D) mesurée parallèlement audit deuxième axe (B, F ; B', F') et à une deuxième distance (L₂, M₂, N₂', O₂') à partir dudit quatrième axe (D) mesurée parallèlement audit troisième axe (C, G ; C', G') ;
au moins une entre lesdites première et deuxième distances (L₁, L₂ ; M₁, M₂ ; N₁', N₂' ; O₁', O₂') étant associée au format desdits contenants (3) destinés à être transportés.

2. Élément modulaire selon la revendication 1, **caractérisé en ce qu'**il comprend une paire desdits premiers éléments de support (20a, 20b ; 20a', 20b' ; 20a"', 20b"') agencés sur des côtés axiaux opposés respectifs par rapport audit premier axe (A, E ; A', E' ; A"", E"") de ladite première vis sans fin (11a, 11b ; 11a', 11b' ; 11a"', 11b"' ; 11a"", 11b"").

3. Élément modulaire selon la revendication 1 ou 2, **caractérisé en ce que** ledit premier élément de support (20a, 20b ; 20a', 20b' ; 20a"', 20b"') comprend :
- une première partie principale (21a, 21b) portant lesdits premiers moyens de raccordement libérable (30a, 30b) ; et
- une première partie d'extrémité (22a, 22b) raccordée à ladite première partie principale (21a, 21b) et définissant un sommet (23a, 23b) qui fait saillie, durant l'utilisation, vers ledit transporteur supplémentaire (6) ; ladite première vis sans fin (11a, 11b ; 11a', 11b" ; 11a"', 11b"' ; 11a"", 11b"") étant installée de façon rotative sur ledit sommet (23a, 23b) autour dudit premier axe (A, E ; A', E' ; A"", E"").

4. Unité de transport (4), comprenant :
- un premier moteur (40a, 40b, 40a"', 40a"") ; et
- au moins un premier élément modulaire (1a, 1b ; 1a', 1b' ; 1a"', 1b"' ; 1a"" ; 1b"") selon une quelconque des revendications précédentes ;
- un premier élément de transmission de mouvement (41a, 41a"', 41a"" ; 41b) fonctionnellement interposé entre ladite première vis sans fin (11a, 11b ; 11a', 11b' ; 11a"', 11b"' ; 11a"", 11b"") dudit élément modulaire (1a, 1b ; 1a', 1b' ; 1a"', 1b'" ; 1a"", 1b"") et ledit premier moteur (40a, 40b, 40a"', 40a"");
ledit élément de transmission (41a, 41b, 41a"', 41a"") étant capable de transmettre le mouvement entre deux directions parallèles ou coïncidentes l'une par rapport à l'autre.

5. Unité de transport selon la revendication 4, **caractérisée en ce que** ledit élément de transmission (41a, 41a"', 41"" ; 41b) est un premier joint (41a, 41a"' 41a"" ; 41b) qui comprend un premier arbre (42a, 42a"', 42a"", 42b) ;
ledit premier arbre (42a, 42a"', 42a"", 42b) étant raccordé à un premier arbre de sortie dudit premier moteur (40a, 40b, 40a"', 40a"") par l'intermédiaire d'un premier joint de cardan (46a, 46a"', 46a"", 46b) et étant raccordé à ladite première vis sans fin (11a, 11b ; 11a', 11b' ; 11a"', 11b"' ; 11a"", 11b"") par l'intermédiaire d'un second joint de cardan (43a, 43a"', 43a"", 43b).

6. Unité de transport selon la revendication 4 ou 5, **caractérisée en ce qu'**elle comprend :
- un deuxième élément modulaire (1b, 1a ; 1b', 1a' ; 1b", 1a" ; 1b"', 1a"' ; 1b"", 1a"") comprenant, à son tour, au moins un deuxième élément de support (20b, 20a ; 20b', 20a' ; 20b", 20a" ; 20b"', 20a"' ; 20b"", 20a"") et une seconde vis sans fin (11b, 11a ; 11b', 11a' ; 11b", 11a" ; 11b"', 11a"' ; 11b"", 11a"") qui peut tourner autour d'un cinquième axe (E, A ; E', A' ; E"" ; A"") par rapport audit deuxième élément de support (20b, 20a ; 20b', 20a' ; 20b", 20a" ; 20b"', 20a"') ; ladite seconde vis sans fin (11b, 11a ; 11b', 11a' ; 11b", 11a" ; 11b"', 11a"' ; 11b"", 11a"") étant adaptée pour coopérer avec une deuxième partie (8b, 8a) d'au moins lesdits deux contenants (3) ;
ladite seconde vis sans fin (11b, 11a ; 11b', 11a' ; 11b", 11a" ; 11b"', 11a"' ; 11b"", 11a"") étant fixe relativement audit au moins un deuxième élément de support (20b, 20a ; 20b', 20a' ; 20b", 20a" ; 20b"', 20a"') par rapport à un sixième axe (F ; B) transversal audit cinquième axe (E, A ; E', A' ; E"" ; A"") et par rapport à un septième axe (G, C ; G', C') transversal auxdits cinquième et sixième axes (F, B ; F', B') ;
lesdits premier et deuxième éléments de support (20b, 20a ; 20b', 20a' ; 20b", 20a" ; 20b"', 20a"') comprenant respectivement des deuxièmes et troisièmes moyens de raccordement libérable (36b, 36b' ; 30a, 30a') raccordés de façon libérable les uns aux autres ;
ledit deuxième élément de support (20b, 20b' ; 20a, 20a') supportant ledit cinquième axe (E, A ; E', A' ; E"", A"") de ladite seconde vis sans fin (11b, 11a ; 11b, 11a' ; 11b", 11a" ; 11b"', 11a"' ; 11b"", 11a"") à une troisième distance (M₁ ; L₁ ; O₁' ; N₁') à partir dudit quatrième axe (D) mesurée parallèlement audit deuxième axe (B ; F) et à une quatrième distance (M₂ ; L₂ ; O₂' ; N₂') à partir dudit quatrième axe (D) mesurée parallèlement audit troisième axe (C ; G) ;
au moins une entre lesdites troisième et quatrième distances (M₁, M₂ ; L₁, L₂ ; O₁' ; O₂' ; N₁' ; N₂') étant associée au format desdits contenants (3) destinés à être transportés.

7. Unité de transport selon la revendication 6, **caractérisée en ce que** :
- ledit premier élément modulaire (1a, 1b ; 1a', 1b' ; 1a", 1b" ; 1a"', 1b"' ; 1a"", 1b"") comprend un premier arbre (12a, 12b ; 12a', 12b' ; 12a"', 12b"' ; 12a"", 12b""), qui est supporté de façon rotative par ledit premier élément de support (20a, 20b ; 20a', 20b' ; 20a", 20b" ; 20a"', 20b"') autour dudit premier axe (A, E ; A', E' ; A"", E"") et est rotatif en une seule pièce conjointement avec ladite première vis sans fin (11a, 11a' ; 11b, 11b') autour dudit premier axe (A, E ; A', E' ; A"", E"");
- ledit deuxième élément modulaire (1b, 1a ; 1b', 1a' ; 1b", 1a" ; 1b"', 1a"' ; 1b"", 1a"") comprend un second arbre (12b, 12a ; 12b', 12a' ; 12b"', 12a"' ; 12b"", 12a""), qui est supporté de façon rotative par ledit deuxième élément de support (20b, 20b' ; 20a, 20a') autour dudit cinquième axe (E, A ; E', A' ; E"", A"") et rotatif en une seule pièce conjointement avec ladite seconde vis sans fin (11b, 11a ; 11b', 11a' ; 11b", 11a" ; 11b"', 11a"' ; 11b"", 11a"") autour dudit cinquième axe (E, A ; E', A' ; E"", A"").

8. Unité de transport selon la revendication 7 **caractérisée en ce qu'**elle comprend :
- une première roue dentée (90"') rotative en une seule pièce avec ledit premier arbre (12a"') et entraînée en rotation, durant l'utilisation, par ledit premier moteur (40a"') ; et
- une deuxième roue dentée (91"') rotative en une seule pièce avec ledit second arbre (12b"') ; et
- une troisième roue dentée (92"') s'engrenant avec lesdites première et deuxième roues dentées (90"', 91"') ;
et/ou **caractérisée en ce qu'**elle comprend un second joint (41b, 41b"") raccordé à ladite seconde vis sans fin (11b, 11a ; 11b', 11a' ; 11b", 11a" ; 11b"', 11a"' ; 11b"", 11a"").

9. Unité de transport selon la revendication 8, **caractérisée en ce qu'**elle comprend :
- une première poulie (75"") fonctionnellement raccordée audit premier moteur (40a"") et audit premier joint (41a"") ;
- une seconde poulie (76"") fonctionnellement raccordée audit second joint (41b"") ; et
- une courroie (77"") enroulée sur lesdites première et seconde poulies (75"", 76"").

10. Unité de transport selon une quelconque des revendications 4 à 9, **caractérisée en ce qu'**elle comprend :
un troisième élément modulaire (60a, 60b) ;
ledit troisième élément modulaire (60a, 60b) comprenant, à son tour :
- au moins un troisième élément de support (65a, 65b) ;
- des quatrièmes moyens de raccordement libérable (71a, 71b) pour raccorder de façon libérable ledit troisième élément de support (65a, 65b) à ladite structure fixe (5) ou à un quatrième élément de support (65b, 65a) ;
- au moins un guidage fixe (66a, 66b) adapté pour coopérer avec une troisième partie (9a, 9b) desdits contenants (3) avancés par ledit transporteur (6) ; ledit guidage (66a, 66b) étant agencé à une cinquième distance (N₁, O₁) à partir dudit quatrième axe (D) mesurée parallèlement audit deuxième axe (B), et à une sixième distance (N₂, O₂) à partir dudit quatrième axe (D) mesurée parallèlement audit troisième axe (C) ;
au moins une entre lesdites cinquième et sixième distances (N₁, O₁ ; N₂, O₂) étant associée au format desdits contenants (3) destinés à être transportés ;
et/ou **caractérisée en ce que** ledit premier élément de support (20a, 20b ; 20a', 20b' ; 20a"', 20b"') peut coulisser relativement à ladite structure fixe (5).

11. Machine de traitement de contenant, comprenant :
- au moins une roue en étoile (7) ; et
- une unité de transport (4, 4', 4", 4"', 4"") selon une quelconque des revendications 4 à 10 et agencée en amont de ladite roue en étoile (7).

12. Série d'unités de transport (4, 4', 4", 4"', 4"") pour une machine de traitement de contenant (2), **caractérisée en ce que** chaque unité de transport (4, 4', 4", 4"', 4"") comprend un élément modulaire (1a, 1b ; 1a', 1b' ; 1a", 1b" ; 1a"', 1b"' ; 1a"" , 1b"") ;
ledit élément modulaire (1a, 1b ; 1a', 1b' ; 1a", 1b" ; 1a"', 1b"' ; 1a"", 1b"") comprenant :
- au moins un premier élément de support (20a, 20b ; 20a', 20b' ; 20a"', 20b"') ;
- des premiers moyens de raccordement libérable (30a ; 30a') pour raccorder de façon libérable ledit premier élément de support (20a, 20b ; 20a', 20b' ; 20a"', 20b"') à une structure fixe (5) de ladite machine de traitement de contenant (2) ou à un deuxième élément de support (20b, 20a ; 20b', 20a' ; 20b"', 20a"') ;
- au moins une première vis sans fin (11a, 11b ; 11a' , 11b' ; 11a"', 11b"' ; 11a"", 11b"") qui peut tourner autour d'un premier axe (A, E ; A', E' ; A"", E"") par rapport audit premier élément de support (20a, 20a' ; 21b, 21b'), et est adaptée pour coopérer avec une première partie (8a, 8b) d'au moins deux contenants (3) avançant sur un transporteur (6) le long d'un deuxième axe (D) parallèle audit premier axe (A, E ; A', E' ; A"", E"") afin de les espacer à un pas donné ;
ladite première vis sans fin (11a, 11b ; 11a', 11b' ; 11a"', 11b"' ; 11a"", 11b"") étant fixe relativement audit premier élément de support (20a, 20b ; 20a', 20b' ; 20a"', 20b"') par rapport à un troisième axe (B, F ; B', F') transversal audit premier axe (A, E ; A', E' ; A"", E"") et par rapport à un quatrième axe (C, G ; C', G') transversal audit premier axe (A, E ; A', E' ; A"", E"") et audit troisième axe (B, F;B',F');
ledit au moins un premier élément de support (20a, 20a' ; 20b, 20b') supportant ledit premier axe (A, E ; A', E' ; A"", E"") de ladite première vis sans fin (11a, 11b ; 11a', 11b' ; 11a"', 11b"' ; 11a"", 11b"") relative à une première distance (L₁, M₁, N₁', O₁') relative à partir dudit deuxième axe (D) mesurée parallèlement audit troisième axe (B, F ; B', F') relatif et à une deuxième distance (L₂, M₂, N₂', O₂') relative à partir dudit quatrième axe (D) mesurée parallèlement audit troisième axe (C, G ; C', G') ;
au moins une entre lesdites première et deuxième distances (L₁, L₂; M₁, M₂ ; N₁', N₂' ; O₁', O₂') étant associée au format desdits contenants (3) relatifs destinés à être transportés.

13. Série d'unités de transport (4, 4', 4", 4"', 4"") selon la revendication 12, **caractérisée en ce que** chaque unité de transport (4, 4', 4", 4"', 4"") comprend un deuxième élément modulaire (1b, 1a ; 1b', 1a' ; 1b", 1a" ; 1b'", 1a"' ; 1b"", 1a"") ;
ledit deuxième élément modulaire (1b, 1a ; 1b', 1a' ; 1b", 1a" ; 1b"', 1a"' ; 1b"", 1a"") comprenant, à son tour :
- un deuxième élément de support (20b, 20b' ; 20a, 20a') ; et
- une seconde vis sans fin (11b, 11a ; 11b', 11a' ; 11b", 11a" ; 11b"', 11a"' ; 11b"", 11a"") qui peut tourner autour d'un cinquième axe (E, A ; E', A' ; E"" ; A"") par rapport audit deuxième élément de support (20b, 20b' ; 20a, 20a') ;
ladite seconde vis sans fin (11b, 11a ; 11b', 11a' ; 11b", 11a" ; 11b"', 11a"' ; 11b"", 11a"") étant fixe relativement audit au moins un deuxième élément de support (20b, 20b' ; 20a, 20a') par rapport à un sixième axe (F ; B) transversal audit cinquième axe (E, A ; E', A' ; E"" ; A"") et par rapport à un septième axe (G ; C) transversal audit sixième axe (F ; B) et audit cinquième axe (E, A ; E', A' ; E"" ; A"");
ledit au moins un premier et deuxième élément de support (20a, 20a' ; 20b, 20b') comprenant respectivement des deuxièmes et troisièmes moyens de raccordement libérable (36b, 36b' ; 30a, 30a') raccordés de façon libérable les uns aux autres ;
ledit cinquième axe (E, A ; E', A' ; E"" ; A"") étant agencé à une troisième distance (M₁, L₁ ; O₁', N₁') à partir dudit quatrième axe (D) et à une quatrième distance (M₂, L₂, O₂, N₂) à partir dudit quatrième axe (D) ;
au moins une entre lesdites troisième et quatrième distances (M₁, M₂ ; L₁, L₂) étant associée au format des contenants (3) destinés à être transportés.

14. Série d'unités de transport selon la revendication 12 ou 13, **caractérisée en ce que** chaque unité de transport (4) comprend un troisième élément modulaire (60a, 60b) comprenant, à son tour :
- au moins un guidage fixe (66a, 66b) adapté pour coopérer avec une troisième partie (9a, 9b) desdits contenants (3) avançant parallèlement audit premier axe (A, E ; A' , E' ; A"" , E"") ; et
- au moins un troisième élément de support (60a, 60b) qui comprend des quatrièmes moyens de raccordement libérable (71a ; 71b) pour raccorder de façon libérable ledit troisième élément de support (60a ; 60b) à ladite structure fixe (5) ou à un quatrième élément de support (60b ; 60a) ;
ledit guidage (66a ; 66b) étant agencé à une cinquième distance (N₁ ; O₁) à partir dudit quatrième axe (D) mesurée parallèlement audit deuxième axe (B), et à une sixième distance (N₂ ; O₂) à partir dudit quatrième axe (D) mesurée parallèlement audit troisième axe (C) ;
au moins une entre lesdites cinquième et sixième distances (N₁, N₂ ; O₁, O₂) étant associée au format desdits contenants (3) destinés à être transportés.

15. Procédé pour adapter une unité de transport (4, 4', 4", 4"', 4"') pour une machine de traitement de contenant (2) à un format de contenants (3) différent, ladite unité de transport (4, 4', 4", 4"', 4"') comprenant :
- une structure fixe (5) ;
- au moins une première vis sans fin (11a, 11b ; 11a', 11b' ; 1a"', 11b"' ; 11a"", 11b"") qui peut tourner relativement à ladite structure fixe (5) autour d'un premier axe (A, E ; A', E' ; A"", E"") ;
ladite première vis sans fin (11a, 11b ; 11a', 11b' ; 11a"', 11b"' ; 11a"", 11b"") étant adaptée pour coopérer avec une première partie (8a, 8b) desdits contenants (3) avançant parallèlement audit premier axe (A, E ; A', E' ; A"", E"") afin de les espacer à un pas donné, ledit procédé étant **caractérisé en ce qu'**il comprend les étapes de :
choix d'un élément de support modulaire (1a, 1b ; 1a', 1b' ; 1a", 1b" ; 1a"', 1b"' ; 1a"", 1b""), supportant de façon rotative ladite première vis sans fin (11a, 11b ; 11a', 11b' ; 11a"', 11b"' ; 11a"", 11b"") autour dudit premier axe (A, E ; A' E' ; A"", E"") en fonction d'au moins une entre une première distance (L₁ ; M₁) entre ledit premier axe (A, E ; A', E' ; A"", E"") et un deuxième axe de référence fixe (D) mesurée parallèlement à un troisième axe (B, B') transversal audit premier axe (A, E ; A', E' ; A"", E""), et une deuxième distance (L₂ ; M₂) entre ledit premier axe (A, E ; A', E' ; A"", E"") et ledit deuxième axe de référence (D) mesurée parallèlement à un quatrième axe (C, C') transversal auxdits premier et deuxième axes (A, B) ; et
- raccordement libérable dudit élément de support modulaire (1a, 1b ; 1a', 1b' ; 1a", 1b" ; 1a"' 1b"' ; 1a"", 1b"") à ladite structure fixe (5).
